# EUROPEAN PATENT APPLICATION

(11) **EP 3 355 579 A1**
(43) Date of publication of application: **01.08.2018**
(21) Application number: 16868864.6
(22) Date of filing: 23.11.2016
(51) Int. Cl.: H04N 19/11, H04N 19/176, H04N 19/46, H04N 19/117, H04N 19/80

(54) **METHOD FOR ENCODING/DECODING IMAGE AND DEVICE THEREFOR**

(30) Priority: 24.11.2015 US 201562259174 P
(71) Applicant: Samsung Electronics Co., Ltd., Suwon-si, Gyeonggi-do 16677 (KR)
(72) Inventor: LIM, Kyung-min, Seoul 07216 (KR); MIN, Jung-hye, Yongin-si Gyeonggi-do 17103 (KR); LEE, Sun-il, Seoul 06751 (KR)
(74) Representative: Appleyard Lees IP LLP
(86) International application number: PCT/KR2016/013529
(87) International publication number: WO 2017/090968

(57) **Abstract**

Provided is a video decoding method including determining a data unit for intra prediction from a video picture; obtaining, from a bitstream, intra prediction type information indicating whether to predict the data unit according to a first intra prediction type that predicts using predetermined prediction information or a second intra prediction type that predicts using data units adjacent to the data unit; determining a first data unit predicted according to the first intra prediction type and a second data unit predicted according to the second intra prediction type, based on the intra prediction type information obtained from the bitstream; generating a first prediction value with respect to the first data unit predicted according to the first intra prediction type by using the predetermined prediction information; and generating a second prediction value with respect to the second data unit predicted according to the second intra prediction type by using the data units adjacent to the data unit.

## Description

### TECHNICAL FIELD

A method and apparatus according to an embodiment are capable of encoding or decoding an image by using various data units included in the image.

### BACKGROUND ART

Image data is encoded according to a data compression standard, e.g., a codec according to the Moving Picture Expert Group (MPEG) standard, and is recorded on a recording medium in the form of a bitstream or transmitted via a communication channel.

With the development and supply of hardware for reproducing and storing high-resolution or high-quality image content, there is a growing need for a codec for effectively encoding or decoding the high-resolution or high-quality image content. Encoded image content may be decoded and thus reproduced. Recently, methods of effectively compressing such high-resolution or high-quality image content have been implemented. For example, an efficient image compression method of arbitrarily processing an image to be encoded is implemented.

To compress an image, various data units may be used, and a hierarchical relationship may exist among the data units. A data unit may be split by using various methods to determine a size of the data unit used in the image compression, and when an optimized data unit according to image characteristics is determined, image encoding or decoding may be performed.

### DESCRIPTION OF EMBODIMENTS

### TECHNICAL PROBLEM

In the general compression method, a compression sequence proceeds from a top left side to a bottom right side, and prediction is performed using only left and top coded values in intra prediction. In this case, since the entire region is predicted as the left and top values, there is a problem that prediction accuracy of right and bottom regions is reduced.

### SOLUTION TO PROBLEM

According to an aspect of the present disclosure, a video decoding method includes determining a data unit for intra prediction from a video picture; obtaining, from a bitstream, intra prediction type information indicating whether to predict the data unit according to a first intra prediction type that predicts using predetermined prediction information or a second intra prediction type that predicts using data units adjacent to the data unit; determining a first data unit predicted according to the first intra prediction type and a second data unit predicted according to the second intra prediction type, based on the intra prediction type information obtained from the bitstream; generating a first prediction value with respect to the first data unit predicted according to the first intra prediction type by using the predetermined prediction information; and generating a second prediction value with respect to the second data unit predicted according to the second intra prediction type by using the data units adjacent to the data unit.

According to another aspect of the present disclosure, a video encoding method includes determining a first data unit according to a first intra prediction type that predicts using predetermined prediction information and a second data unit according to a second intra prediction type that predicts using data units adjacent to the second data unit; generating a first prediction value with respect to the first data unit predicted according to the first intra prediction type by using the predetermined prediction information; generating a second prediction value with respect to the second data unit predicted according to the second intra prediction type by using the data units adjacent to the second data unit; and generating a bitstream including encoding information determined based on at least one of the first prediction value and the second prediction value to encode a video picture, wherein the bitstream includes the predetermined prediction information.

According to another aspect of the present disclosure, a video decoding apparatus includes: a data unit determiner configured to determine data units for intra prediction from a video picture; a bitstream obtainer configured to obtain, from a bitstream, intra prediction type information indicating whether to predict the data units according to a first intra prediction type that predicts using predetermined prediction information or a second intra prediction type that predicts using data units adjacent to the data units; and a decoder configured to determine a first data unit predicted according to the first intra prediction type and a second data unit predicted according to the second intra prediction type, based on the intra prediction type information obtained from the bitstream, generate a first prediction value with respect to the first data unit predicted according to the first intra prediction type using the predetermined prediction information, and generate a second prediction value with respect to the second data unit predicted according to the second intra prediction type using the data units adjacent to the data units.

According to another aspect of the present disclosure, a video encoding device includes a data unit determiner configured to determine a first data unit according to a first intra prediction type that predicts using predetermined prediction information and a second data unit according to a second intra prediction type that predicts using data units adjacent to the second data unit; and a bitstream generator and an encoder configured to generate a first prediction value with respect to the first data unit predicted according to the first intra prediction type by using the predetermined prediction information, generate a second prediction value with respect to the second data unit predicted according to the second intra prediction type by using the data units adjacent to the second data unit, and generate a bitstream including encoding information determined based on at least one of the first prediction value and the second prediction value to encode a video picture, wherein the bitstream includes the predetermined prediction information.

### ADVANTAGEOUS EFFECTS OF DISCLOSURE

Since available reference values may be expanded and used, data units adaptive to characteristics of an image may be used, thereby enabling efficient image encoding and decoding and enhancing quality of a reconstructed image.

### BRIEF DESCRIPTION OF DRAWINGS

FIG. 1 shows a block diagram of an image decoding apparatus capable of decoding an image based on at least one of block shape information and splitting shape information, according to an embodiment.
FIG. 2 illustrates a block diagram of an image encoding apparatus capable of encoding an image based on at least one of block shape information and splitting shape information, according to an embodiment.
FIG. 3 illustrates a process of determining a first data unit predicted according to a first intra prediction shape and a second data unit predicted according to a second intra prediction shape, according to an embodiment.
FIG. 4 illustrates a process of predicting a first data unit according to a first intra prediction type based on predetermined prediction information, according to an embodiment.
FIG. 5 illustrates a process of predicting a second data unit according to a second intra prediction type that predicts using adjacent data units, according to an embodiment.
FIG. 6 illustrates a process of predicting a second data unit according to a second intra prediction type that predicts using data units adjacent to left and top sides and data units adjacent to right and bottom sides, according to an embodiment.
FIG. 7 illustrates a process of determining a first intra prediction type and a second intra prediction type with respect to a data unit, according to an embodiment.
FIG. 8 shows a flowchart of a video decoding method using intra prediction type information, according to an embodiment.
FIG. 9 shows an operation performed by the image encoding apparatus of determining one or more coding units by splitting the first coding unit, according to an embodiment.
FIG. 10 shows that splitting methods for determining non-square second coding units by splitting a first coding unit are restricted when the second coding units satisfy a predetermined condition, according to an embodiment.
FIG. 11 shows an operation of splitting a square coding unit when splitting shape information indicates not to split the square coding unit into four square coding units, according to an embodiment.
FIG. 12 shows that a processing order of a plurality of coding units is variable depending on an operation of splitting a coding unit, according to an embodiment.
FIG. 13 shows an operation of determining a depth of a coding unit as the shape and size of the coding unit varies when a plurality of coding units are determined by recursively splitting the coding unit, according to an embodiment.
FIG. 14 shows depths of coding units and part indices (PIDs) for identifying the coding units, which are determinable based on the shapes and sizes of the coding units, according to an embodiment.
FIG. 15 shows that a plurality of coding units are determined based on a plurality of predetermined data units included in a picture, according to an embodiment.
FIG. 16 shows a processing block serving as a unit for determining a determination order of reference coding units included in a picture, according to an embodiment.
FIG. 17 is a diagram showing coding units that may be determined for each picture, in a case where a combination of split types of a coding unit varies according to each picture, according to an embodiment.
FIG. 18 is a diagram showing various types of coding units that may be determined based on split type information expressed in a binary code, according to an embodiment.
FIG. 19 is a diagram showing another type of coding unit that may be determined based on split type information that may be expressed in a binary code, according to an embodiment.
FIG. 20 is a block diagram of an image encoding and decoding system performing loop filtering.
FIG. 21 is a diagram showing examples of filtering units included in a largest coding unit and filtering execution information of the filtering units, according to an embodiment.
FIG. 22 is a diagram illustrating a process of performing merging or splitting between coding units determined according to a predetermined encoding method, according to an embodiment.
FIG. 23 is a diagram showing an index according to a Z-scanning order of coding units, according to an embodiment.
FIG. 24 is a diagram showing a reference sample for intra predicting a coding unit, according to an embodiment.

### BEST MODE

Hereinafter, the present disclosure will be described in detail by explaining embodiments of the disclosure with reference to the attached drawings. The disclosure may, however, be embodied in many different forms and not be construed as being limited to the embodiments set forth herein; rather, these embodiments are provided so that this disclosure will be thorough and complete, and will fully convey the concept of the disclosure to one of ordinary skill in the art.

Terminology used in this specification will now be briefly described before describing embodiments in detail.

Although the terms used in the following description are selected, as much as possible, from general terms that are widely used at present while taking into consideration the functions obtained in accordance with the embodiments, these terms may be replaced by other terms based on intentions of one of ordinary skill in the art, customs, emergence of new technologies, or the like. In a particular case, terms that are arbitrarily selected by the applicant may be used. In this case, the meanings of these terms may be described in corresponding parts of the embodiments. Therefore, it is noted that the terms used herein are construed based on practical meanings thereof and the whole content of this specification, rather than being simply construed based on names of the terms.

As used herein, the singular forms "a", "an", and "the" are intended to include the plural forms as well, unless the context clearly indicates otherwise.

It will be understood that the terms "comprises", "comprising", "includes" and/or "including", when used herein, specify the presence of stated elements, but do not preclude the presence or addition of one or more other elements. The term "part" or "module" is used to denote an entity for performing at least one function or operation, and may be embodied as, but is not limited to, a software element or a hardware element such as a field-programmable gate array (FPGA) or an application-specific integrated circuit (ASIC). A "part" or "module" may be configured to exist in an addressable storage medium or to operate one or more processors. Thus, for example, the "part" or "module" includes elements (e.g., software elements, object-oriented software elements, class elements, and task elements), processes, functions, attributes, procedures, subroutines, segments of program code, drivers, firmware, micro-codes, circuits, data, database, data structures, tables, arrays, and parameters. Functions provided in elements and "parts" or "modules" may be combined to a smaller number of elements and "parts" or "modules" or may be divided into a larger number of elements and "parts" or "modules".

In the following description, the term "image" denotes a still image, e.g., a still frame of a video, or a moving image, e.g., a video itself.

The term "sample" denotes data assigned to a sampling location of an image, i.e., data to be processed. For example, pixel values of an image in the spatial domain, and transformation coefficients in the transformation domain may be samples. A unit including one or more samples may be defined as a block.

Reference will now be made in detail to embodiments, examples of which are illustrated in the accompanying drawings. In the following description, for clarity, parts or elements that are not related to the embodiments are omitted.

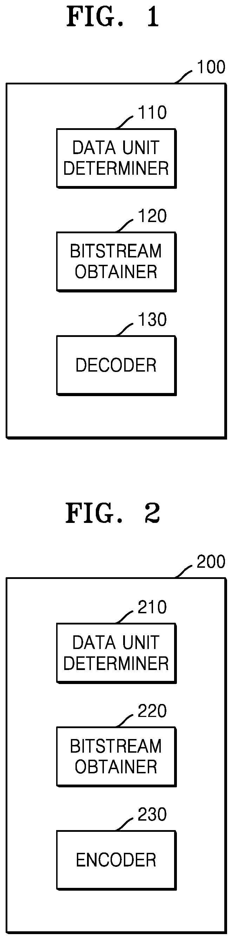

FIG. 1 shows a block diagram of an image decoding apparatus 100 capable of decoding an image based on at least one of block shape information and splitting shape information, according to an embodiment.

Referring to FIG. 1, according to an embodiment, the image decoding apparatus 100 may include a data unit determiner 110 that determines data units for intra prediction from a video picture, a bitstream obtainer 120 that obtains intra prediction type information indicating whether to predict according to a first intra prediction type that predicts using predetermined prediction information or whether to predict according to a second intra prediction type that predicts using adjacent data units of the data unit, from a bitstream, and a decoder 130 that determines first data units predicted according to the first intra prediction type and second data units predicted according to the second intra prediction type, based on the obtained intra prediction type information, generates a first prediction value with respect to the first data unit according to the first intra prediction type using the predetermined prediction information and generates a second prediction value with respect to the second data unit according to the second intra prediction type using the adjacent data units of the data unit. According to an embodiment, when the bitstream obtainer 120 of the image decoding apparatus 100 obtains the intra prediction type information, the decoder 130 of the image decoding apparatus 100 may generate the first prediction value with respect to the first data unit according to the first intra prediction type based on the intra prediction type information.

According to an embodiment, the data unit determiner 110 of the image decoding apparatus 100 may determine data units for intra prediction. For example, the data units may be one of coding units, prediction units, and transform units.

According to an embodiment, the bitstream obtainer 120 of the image decoding apparatus 100 may obtain the intra prediction type information indicating whether to predict the determined data units according to the first intra prediction type or the second intra prediction type. Prediction according to the first intra prediction type may perform intra prediction using information other than peripheral data units. Prediction according to the second intra prediction type may perform intra prediction using neighboring data units.

According to an embodiment, the decoder 130 of the image decoding apparatus 100 may generate the first prediction value with respect to the first data unit according to the first intra prediction type based on the intra prediction type information. The decoder 130 may generate the second prediction value with respect to the second data unit according to the second intra prediction type. For example, the decoder 130 may generate a prediction value by using data units of left and top sides or data unit of right and bottom sides among adjacent data units of the second data unit.

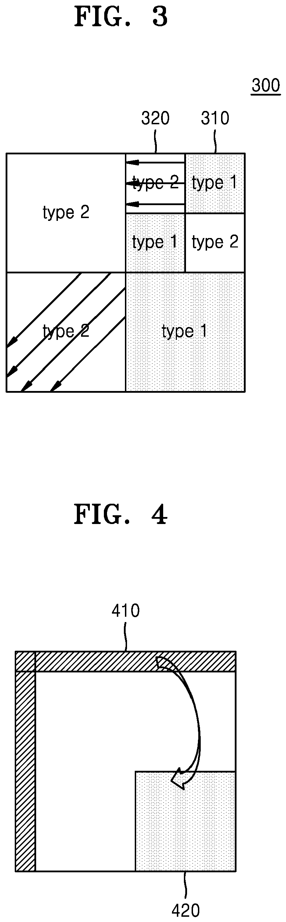

FIG. 3 illustrates a process of determining a first data unit predicted according to a first intra prediction type and a second data unit predicted according to a second intra prediction type, according to an embodiment.

According to an embodiment, the decoder 130 may generate first data units 310 predicted according to the first intra prediction type and second data units 320 predicted according to the second intra prediction type, based on intra prediction type information. For example, it may be determined whether a predicted data unit is predicted using neighboring data units or information other than information about the neighboring data units.

According to an embodiment, the decoder 130 may predict a data unit using information other than information about the neighboring data units. For example, the decoder 130 may perform prediction using a specified value stored in a slice header, a PPS, or a SPS. For example, a predetermined value may be previously allocated to each region in the data unit.

Referring to FIG. 3, when the decoder 130 predicts the first data units 310 according to the first intra prediction, the decoder 130 may predict the second data units 320 according to the second intra prediction type. For example, the second data units 320 may be predicted using information about the first data units 310 predicted according to the first intra prediction type. For example, the second data units 320 may be predicted using at least one of data units adjacent to a right or bottom side.

According to an embodiment, the decoder 130 may generate a prediction value of the second data unit 320 as an average value of sample values of the first data unit 310 adjacent to the second data unit 320. Alternatively, the decoder 130 may generate the prediction value using the sample value of the first data unit 310 adjacent to the right with respect to right prediction samples in the second data unit 320, and generate the prediction value using the sample value of the first data unit 310 adjacent to the bottom side with respect to bottom prediction samples in the second data unit 320.

According to an embodiment, the decoder 130 may generate the prediction value based on a relative directionality of adjacent data units with respect to the prediction samples in the second data unit 320. For example, the decoder 130 may generate the prediction value of the second data unit 320 by applying a weight of a relative distance to a sample value.

According to an embodiment, the decoder 130 may generate the prediction value of the second data unit 320 using a reference sample of the first data unit 310 adjacent to the right side and a reference sample of the second data unit 320 adjacent to the top side. For example, the decoder 130 may generate the prediction value of a data unit to be predicted by applying the same Intra_angular mode to the reference samples of the first data unit 310 and the second data unit 320 predicted by different intra prediction types. For example, even when the same Intra_angular mode is applied, the decoder 130 may apply a weight according to a type of a reference sample, that is, the reference sample of the first data unit 310 or the reference sample of the second data unit 320 to generate the prediction value of the data unit.

FIG. 4 illustrates a process of predicting a first data unit according to a first intra prediction type based on predetermined prediction information, according to an embodiment.

According to an embodiment, the decoder 130 may predict first data units 420 predicted according to the first intra prediction type using information other than information about neighboring data units. For example, the first data units 420 may be predicted using sample values 410 adjacent to a data unit of an upper layer that includes the first data unit 420. The sample value 410 adjacent to the data unit of the upper layer including the first data unit 420 may include information about neighboring pixels of a CTU boundary or information about neighboring pixels of a CU boundary. When prediction is performed using the information about the neighboring pixels of the CTU boundary, a prediction target unit may be CU, PU, TU, or CTU. When prediction is performed using the information about the neighboring pixels of the CU boundary, the prediction target unit may be PU, TU, or CU.

According to an embodiment, the decoder 130 may generate a prediction value of the first data unit 420 as an average value of the sample values 410 of reference samples adjacent to the data unit of the upper layer including the first data unit 420. For example, the decoder 130 may perform filtering on samples adjacent to the data unit of the upper layer to remove discontinuity with reference samples of the first data unit 420. For example, the decoder 130 may take different filters for a left top sample and a left sample or a right sample of the data unit of the upper layer.

According to an embodiment, the decoder 130 may generate the prediction value by applying an Intra_Angular mode based on a relative directionality of the reference samples adjacent to the data unit of the upper layer including the first data unit 420. For example, the decoder 130 may generate the prediction value of the first data unit 420 by applying a weight of a relative distance to a sample value.

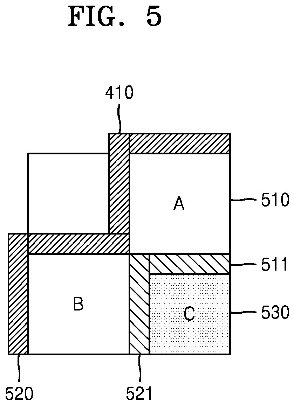

FIG. 5 illustrates a process of predicting a second data unit according to a second intra prediction type predicted using adjacent data units, according to an embodiment.

According to an embodiment, the decoder 130 may perform prediction according to the second intra prediction type using data units adjacent to a data unit. For example, when prediction is performed on a data unit 510, information 511 about a data unit 530 encoded according to a first intra prediction type adjacent to a bottom side of the data unit 510 may be used. For example, when prediction is performed on a data unit 520, information 521 about the data unit 530 encoded according to the first intra prediction type adjacent to a right side of the data unit 520 may be used.

According to an embodiment, the decoder 130 may perform prediction using sample values of left and top sides when a distance of the left or top side is close according to a sample position predicted in the data unit 510. Alternatively, according to an embodiment, the decoder 130 may perform prediction using sample values of right and bottom sides when a distance of the right or bottom side is close according to the sample position predicted in the data unit 510.

According to an embodiment, the decoder 130 may generate a prediction value of the data unit 510 as an average value of neighboring reference samples of the data unit 510. For example, the decoder 130 may generate a prediction value of a reference sample in a data unit by using an average value of reference samples adjacent to the left side and reference samples adjacent to the top side, and an average value of reference samples adjacent to the bottom side and reference samples adjacent to the right side. For example, the decoder 130 may generate a prediction value of a prediction sample in the data unit by applying a weight of a distance between prediction samples in the data unit 510 and the neighboring reference samples to each average value.

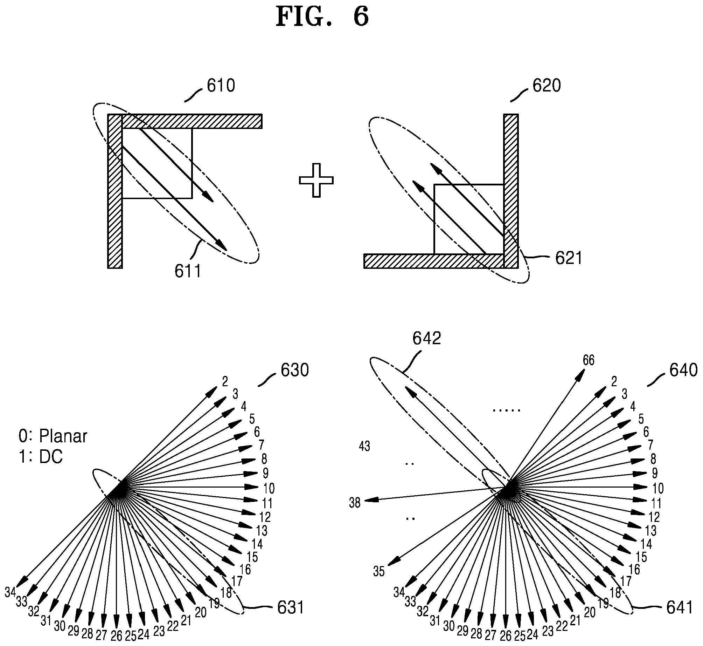

According to an embodiment, the decoder 130 may generate the prediction value of the prediction sample considering a directionality of the data unit 510 and the neighboring reference samples of the data unit 510. A method of considering the directionality of the data unit 510 and the neighboring reference samples of the data unit 510 will be described later with reference to FIG. 6.

According to an embodiment, the decoder 130 may use one of reference samples adjacent to the prediction samples in the data unit 520 as a prediction sample value with respect to one line. For example, the decoder 130 may use one of the reference samples adjacent to the bottom side of the data unit 510 as a prediction sample value with respect to one line in a vertical direction in the data unit 520. For example, the decoder 130 may use one of the reference samples adjacent to the right side of the data unit 520 as a prediction sample value with respect to one line in a horizontal direction in the data unit 520.

FIG. 6 illustrates a process of predicting a second data unit according to a second intra prediction type that predicts using data units adjacent to left and top sides and data units adjacent to right and bottom sides, according to an embodiment.

Referring to FIG. 6, when a second prediction value with respect to the second data unit according to the second intra prediction type is generated, the decoder 130 may generate a prediction value using at least one of left and top data units. Alternatively, the decoder 130 may generate the prediction value using at least one of right and bottom data units. The decoder 130 may generate a new prediction value 611 by bi-linearly interpolating the prediction value generated using at least one of the left and top data units according to a distance and using a same prediction mode 631.

According to an embodiment, the decoder 130 may generate a prediction value 621 using at least one of the right and bottom data units based on new prediction modes 642 in addition to existing prediction modes 641. For example, the decoder 130 may use sample values adjacent to the right and bottom data units based on new 67 prediction modes 640 in which 32 prediction modes are added to existing 35 prediction modes 640.

According to an embodiment, the decoder 130 may perform filtering on the prediction value generated using at least one of the left and top data units and the prediction value generated using at least one of the right and bottom data units to mitigate a boundary portion. For example, the decoder 130 may perform filtering to remove discontinuity between adjacent samples that are not referred to in the two modes and a prediction sample.

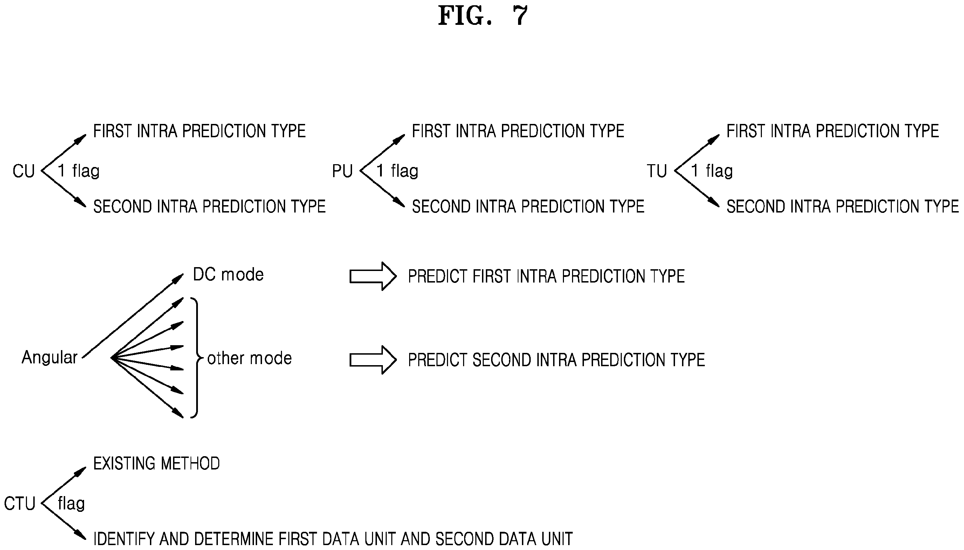

FIG. 7 illustrates a process of determining a first intra prediction type and a second intra prediction type with respect to a data unit, according to an embodiment.

According to an embodiment, the decoder 130 may determine whether to generate a prediction value according to the first intra prediction type or whether to generate a prediction value according to the second intra prediction type with respect to each of CU, PU or TU based on intra prediction type information.

According to an embodiment, the decoder 130 may determine to perform prediction according to the first intra prediction type in an Intra_DC mode and perform prediction according to the second intra prediction type in modes other than the Intra_DC mode.

According to an embodiment, the decoder 130 may obtain a flag indicating which one of a first data unit and a second data unit is used to classify a data unit and, when the obtained flag indicates which one of the first data unit and the second data unit is used to classify the data unit, generate a prediction value of the data unit according to the first or second intra prediction type.

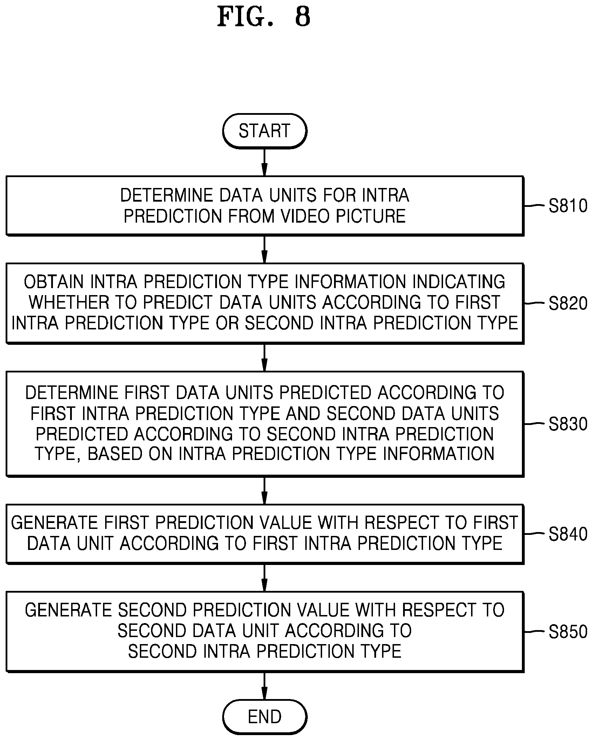

FIG. 8 shows a flowchart of a video decoding method using intra prediction type information, according to an embodiment.

In operation S810, the data unit determiner 110 of the image decoding apparatus 100 may determine data units for intra prediction from a video picture.

In operation S820, the bitstream obtainer 120 of the image decoding apparatus 100 may obtain intra prediction type information indicating whether to predict the data units according to a first intra prediction type that predicts using predetermined prediction information from a bitstream or a second intra prediction type that predicts using adjacent data units of the data units.

In operation S830, the decoder 130 of the image decoding apparatus 100 may determine first data units predicted according to the first intra prediction type and second data units predicted according to the second intra prediction type, based on the intra prediction type information.

In operation S840, the decoder 130 of the image decoding apparatus 100 may generate a first prediction value with respect to the first data unit according to the first intra prediction type using the predetermined prediction information.

In operation S850, the decoder 130 of the image decoding apparatus 100 may generate a second prediction value with respect to the second data unit according to the second intra prediction type using the adjacent data units of the data units.

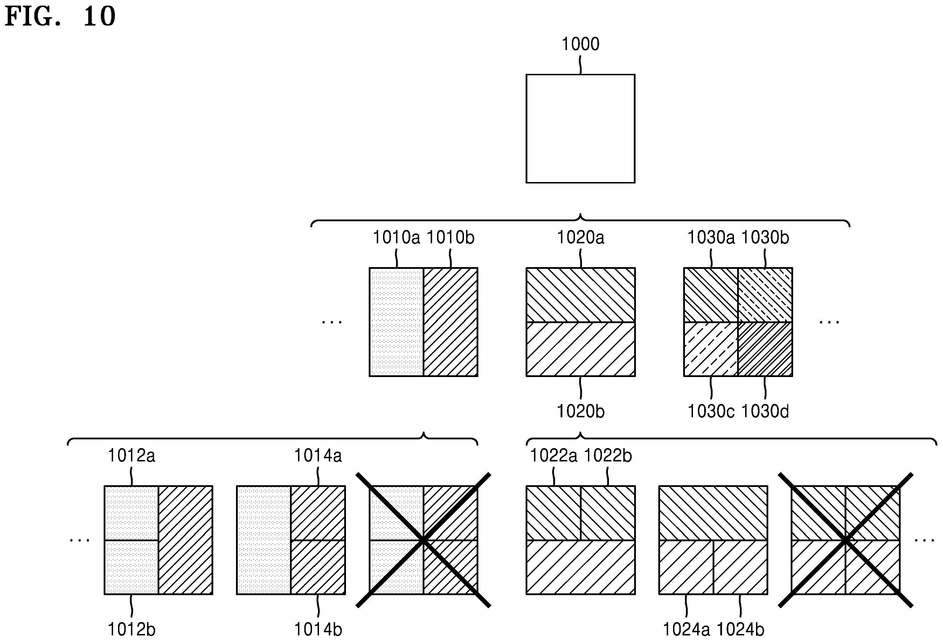

FIG. 10 shows that splitting methods for determining non-square second coding units by splitting a first coding unit 1000 are restricted by the image decoding apparatus 100 when the second coding units satisfy a predetermined condition, according to an embodiment.

According to an embodiment, the decoder 130 may determine to split the square first coding unit 1000 into non-square second coding units 1010a, 1010b, 1020a and 1020b based on at least one of block shape information and splitting shape information obtained through the bitstream obtainer 120. The second coding units 1010a, 1010b, 1020a and 1020b may be independently split. As such, the decoder 130 may determine to or not to split the first coding unit 1000 into a plurality of coding units based on at least one of the block shape information and the splitting shape information of each of the second coding units 1010a, 1010b, 1020a and 1020b. According to an embodiment, the decoder 130 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the decoder 130 may restrict the right second coding unit 1010b not to be split in a horizontal direction in which the left second coding unit 1010a is split. When third coding units 1014a and 1014b are determined by also splitting the right second coding unit 1010b in a horizontal direction, since the left and right second coding units 1010a and 1010b are independently split in a horizontal direction, the third coding units 1012a, 1012b, 1014a and 1014b may be determined. However, this case serves equally as a case in which the decoder 130 splits the first coding unit 1000 into four square second coding units 1030a, 1030b, 1030c, and 1030d based on at least one of the block shape information and the splitting shape information, and may be inefficient in terms of image decoding.

According to an embodiment, the decoder 130 may determine third coding units 1022a, 1022b, 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, due to the above-described reason, the decoder 130 may restrict the other second coding unit (e.g., the lower second coding unit 1020b) not to be split in a vertical direction in which the upper second coding unit 1020a is split.

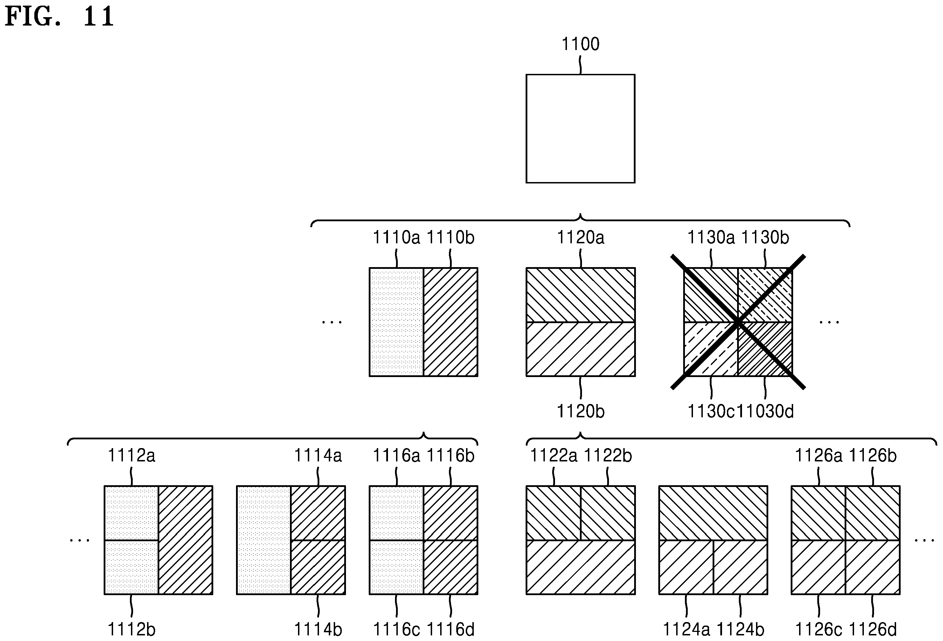

FIG. 11 shows an operation of splitting a square coding unit by the image decoding apparatus 100 when splitting shape information indicates not to split the square coding unit into four square coding units, according to an embodiment.

According to an embodiment, the decoder 130 may determine second coding units 1110a, 1110b, 1120a and 1120b by splitting a first coding unit 1100 based on at least one of block shape information and splitting shape information. The splitting shape information may include information about various shapes in which a coding unit is split but, in some times, the information about various shapes may not include information for splitting a coding unit into four square coding units. According to the splitting shape information, the decoder 130 may not split the first square coding unit 1100 into four square second coding units 1130a, 1130b, 1130c and 1130d. The decoder 130 may determine the non-square second coding units 1110a, 1110b, 1120a and 1120b based on the splitting shape information.

According to an embodiment, the decoder 130 may independently split the non-square second coding units 1110a, 1110b, 1120a and 1120b. Each of the second coding units 1110a, 1110b, 1120a and 1120b may be recursively split in a predetermined order, and this may correspond to a splitting method of the first coding unit 1100 based on at least one of the block shape information and the splitting shape information.

For example, the decoder 130 may determine square third coding units 1112a and 1112b by splitting the left second coding unit 1110a in a horizontal direction, and determine square third coding units 1114a and 1114b by splitting the right second coding unit 1110b in a horizontal direction. Furthermore, the decoder 130 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c and 1130d split from the first coding unit 1100 may be determined.

As another example, the decoder 130 may determine square third coding units 1122a and 1122b by splitting the upper second coding unit 1120a in a vertical direction, and determine square third coding units 1124a and 1124b by splitting the lower second coding unit 1120b in a vertical direction. Furthermore, the decoder 130 may determine square third coding units 1122a, 1122b, 1124c, and 1124d by splitting both of the upper and lower second coding units 1120a and 1820b in a vertical direction. In this case, coding units having the same shape as the four square second coding units 1130a, 1130b, 1130c and 1130d split from the first coding unit 1100 may be determined.

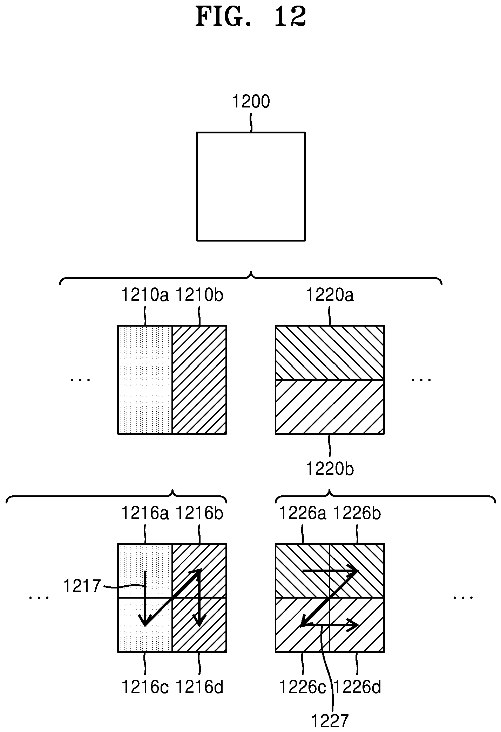

FIG. 12 shows that a processing order of a plurality of coding units is variable depending on an operation of splitting a coding unit, according to an embodiment.

According to an embodiment, the decoder 130 may split a first coding unit 1200 based on block shape information and splitting shape information. When the block shape information indicates a square shape and the splitting shape information indicates to split the first coding unit 1200 in at least one of horizontal and vertical directions, the decoder 130 may determine second coding units (e.g., 1210a, 1210b, 1220a, and 1220b) by splitting the first coding unit 1200. Referring to FIG. 12, the non-square second coding units 1210a, 1210b, 1220a, and 1220b determined by splitting the first coding unit 1200 in only a horizontal or vertical direction may be independently split based on the block shape information and the splitting shape information of each coding unit. For example, the decoder 130 may determine third coding units 1216a, 1216b, 1216c, and 1216d by splitting the second coding units 1210a and 1210b, which are generated by splitting the first coding unit 1200 in a vertical direction, in a horizontal direction, and determine third coding units 1226a, 1226b, 1226c, and 1226d by splitting the second coding units 1220a and 1220b, which are generated by splitting the first coding unit 1200 in a horizontal direction, in a vertical direction. An operation of splitting the second coding units 1210a, 1210b, 1220a, and 1220b has been described above in relation to FIG. 10, and thus a detailed description thereof will not be provided herein.

According to an embodiment, the decoder 130 may process coding units in a predetermined order. An operation of processing coding units in a predetermined order has been described above in relation to FIG. 7, and thus a detailed description thereof will not be provided herein. Referring to FIG. 12, the decoder 130 may determine the four square third coding units 1216a, 1216b, 1216c, 1216d, 1226a, 1226b, 1226c, and 1226d by splitting the square first coding unit 1200. According to an embodiment, the decoder 130 may determine a processing order of the third coding units 1216a, 1216b, 1216c, 1216d, 1226a, 1226b, 1226c, and 1226d based on a splitting method of the first coding unit 1200.

According to an embodiment, the decoder 130 may determine the third coding units 1216a, 1216b, 1216c, and 1216d by splitting the second coding units 1210a and 1210b generated by splitting the first coding unit 1200 in a vertical direction, in a horizontal direction, and process the third coding units 1226a, 1226b, 1226c, and 1226d in a processing order 1217 for initially processing the third coding units 1216a and 1216b, which are included in the left second coding unit 1210a, in a vertical direction and then processing the third coding unit 1216c and 1216d, which are included in the right second coding unit 1210b, in a vertical direction.

According to an embodiment, the decoder 130 may determine the third coding units 1226a, 1226b, 1226c, and 1226d by splitting the second coding units 1220a and 1220b generated by splitting the first coding unit 1200 in a horizontal direction, in a vertical direction, and process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, 1216d, 1226a, 1226b, 1226c, and 1226d may be determined by splitting the second coding units 1210a, 1210b, 1220a, and 1220b. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, 1216d, 1226a, 1226b, 1226c, and 1226d split therefrom eventually show same shape coding units split from the first coding unit 1200. As such, by recursively splitting a coding unit in different manners based on at least one of the block shape information and the splitting shape information, the decoder 130 may process a plurality of coding units in different orders even when the coding units are eventually determined to the same shape.

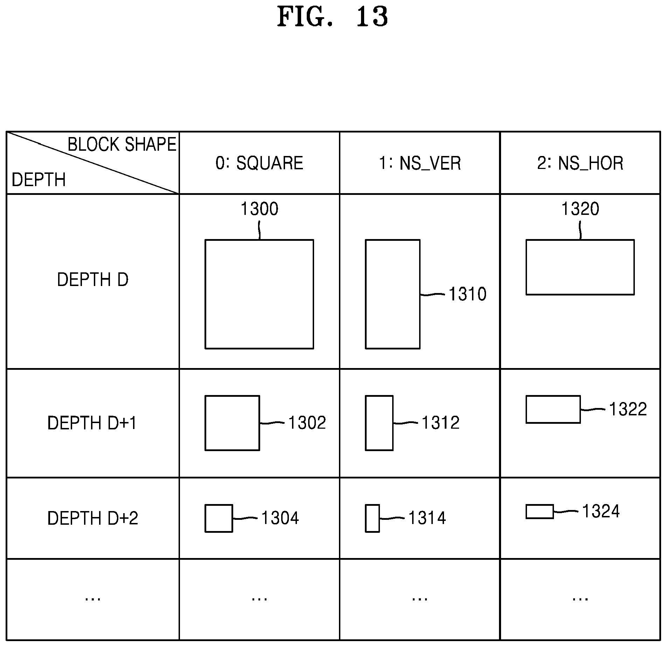

FIG. 13 shows an operation of determining a depth of a coding unit as the shape and size of the coding unit varies when a plurality of coding units are determined by recursively splitting the coding unit, according to an embodiment.

According to an embodiment, the decoder 130 may determine the depth of the coding unit based on a predetermined criterion. For example, the predetermined criterion may be the length of a long side of the coding unit. When the length of a long side of a coding unit before being split is 2ⁿ times (n>0) the length of a long side of a split current coding unit, the decoder 130 may determine that a depth of the current coding unit is increased from a depth of the coding unit before being split, by n. In the following description, a coding unit having an increased depth is expressed as a coding unit of a deeper depth.

Referring to FIG. 13, according to an embodiment, the decoder 130 may determine a second coding unit 1302 and a third coding unit 1304 of deeper depths by splitting a square first coding unit 1300 based on block shape information indicating a square shape (for example, the block shape information may be expressed as '0: SQUARE'). Assuming that the size of the square first coding unit 1300 is 2Nx2N, the second coding unit 1302 determined by reducing a width and height of the first coding unit 1300 to 1/2¹ may have a size of NxN. Furthermore, the third coding unit 304 determined by reducing a width and height of the second coding unit 1302 to 1/2 may have a size of N/2xN/2. In this case, a width and height of the third coding unit 1304 are 1/2² times those of the first coding unit 1300. When a depth of the first coding unit 1300 is D, a depth of the second coding unit 1302, the width and height of which are 1/2¹ times those of the first coding unit 1300, may be D+1, and a depth of the third coding unit 1304, the width and height of which are 1/2² times those of the first coding unit 1300, may be D+2.

According to an embodiment, the decoder 130 may determine a second coding unit 1312 or 1322 and a third coding unit 1314 or 1324 of deeper depths by splitting a non-square first coding unit 1310 or 1320 based on block shape information indicating a non-square shape (for example, the block shape information may be expressed as '1: NS_VER' indicating a non-square shape, a height of which is longer than a width, or as '2: NS_HOR' indicating a non-square shape, a width of which is longer than a height).

The decoder 130 may determine a second coding unit (e.g., 1302, 1312, or 1322) by dividing at least one of a width and height of the first coding unit 1310 having a size of N×2N. That is, the decoder 130 may determine the second coding unit 1302 having a size of N×N or the second coding unit 1322 having a size of N×N/2 by splitting the first coding unit 1310 in a horizontal direction, or determine the second coding unit 1312 having a size of N/2×N by splitting the first coding unit 1310 in horizontal and vertical directions.

According to an embodiment, the decoder 130 may determine the second coding unit (e.g., 1302, 1312, or 1322) by dividing at least one of a width and height of the first coding unit 1320 having a size of 2NxN. That is, the decoder 130 may determine the second coding unit 1302 having a size of N×N or the second coding unit 1312 having a size of N/2xN by splitting the first coding unit 1320 in a vertical direction, or determine the second coding unit 1322 having a size of N×N/2 by splitting the first coding unit 1320 in horizontal and vertical directions.

According to an embodiment, the decoder 130 may determine a third coding unit (e.g., 1304, 1304, or 1324) by dividing at least one of a width and height of the second coding unit 1302 having a size of N×N. That is, the decoder 130 may determine the third coding unit 1304 having a size of N/2×N/2, the third coding unit 1314 having a size of N/2²×N/2, or the third coding unit 1324 having a size of N/2×N/2² by splitting the second coding unit 1302 in vertical and horizontal directions.

According to an embodiment, the decoder 130 may determine the third coding unit (e.g., 1304, 1304, or 1324) by dividing at least one of a width and height of the second coding unit 1312 having a size of N/2×N. That is, the decoder 130 may determine the third coding unit 1304 having a size of N/2×N/2 or the third coding unit 1324 having a size of N/2×N/2² by splitting the second coding unit 1312 in a horizontal direction, or determine the third coding unit 1314 having a size of N/2²×N/2 by splitting the second coding unit 1312 in vertical and horizontal directions.

According to an embodiment, the decoder 130 may determine the third coding unit (e.g., 1304, 1304, or 1324) by dividing at least one of a width and height of the second coding unit 1322 having a size of N×N/2. That is, the decoder 130 may determine the third coding unit 1304 having a size of N/2×N/2 or the third coding unit 1314 having a size of N/2²×N/2 by splitting the second coding unit 1322 in a vertical direction, or determine the third coding unit 1324 having a size of N/2×N/2² by splitting the second coding unit 1312 in vertical and horizontal directions.

According to an embodiment, the decoder 130 may split the square coding unit (e.g., 1300, 1302, or 1304) in a horizontal or vertical direction. For example, the decoder 130 may determine the first coding unit 1310 having a size of N×2N by splitting the first coding unit 1300 having a size of 2Nx2N in a vertical direction, or determine the first coding unit 1320 having a size of 2NxN by splitting the first coding unit 1300 in a horizontal direction. According to an embodiment, when a depth is determined based on the length of the longest side of a coding unit, a depth of a coding unit determined by splitting the first coding unit (e.g., 1300) having a size of 2N×2N in a horizontal or vertical direction may be the same as the depth of the first coding unit (e.g., 1300).

According to an embodiment, a width and height of the third coding unit 1314 or 1324 may be 1/2² times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/2² times those of the first coding unit 1310 or 1320, may be D+2.

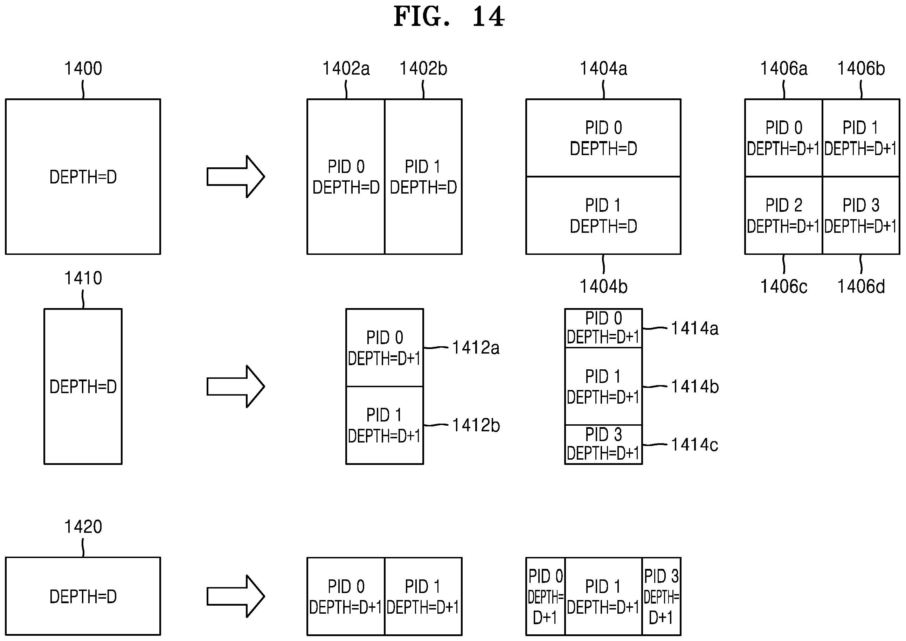

FIG. 14 shows depths of and part indices (PIDs) for identifying coding units, which are determinable based on the shapes and sizes of the coding units, according to an embodiment.

According to an embodiment, the decoder 130 may determine various-shaped second coding units by splitting a square first coding unit 1400. Referring to FIG. 14, the decoder 130 may determine second coding units 1402a, 1402b, 1404a, 1404b, 1406a, 1406b, 1406c, and 1406d by splitting the first coding unit 1400 in at least one of vertical and horizontal directions based on splitting shape information. That is, the decoder 130 may determine the second coding units 1402a, 1402b, 1404a, 1404b, 1406a, 1406b, 1406c, and 1406d based on the splitting shape information of the first coding unit 1400.

According to an embodiment, a depth of the second coding units 1402a, 1402b, 1404a, 1404b, 1406a, 1406b, 1406c, and 1406d, which are determined based on the splitting shape information of the square first coding unit 1400, may be determined based on the length of a long side thereof. For example, since the length of a side of the square first coding unit 1400 equals the length of a long side of the non-square second coding units 1402a, 1402b, 1404a, and 1404b, the first coding unit 14100 and the non-square second coding units 1402a, 1402b, 1404a, and 1404b may have the same depth, e.g., D. However, when the decoder 130 partitions the first coding unit 1400 into the four square second coding units 1406a, 1406b, 1406c, and 1406d based on the splitting shape information, since the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment, the decoder 130 may determine a plurality of second coding units 1412a, 1412b, 1414a, 1414b, and 1414c by splitting a first coding unit 1410, a height of which is longer than a width, in a horizontal direction based on the splitting shape information. According to an embodiment, the decoder 130 may determine a plurality of second coding units by splitting a first coding unit 1420, a width of which is longer than a height, in a vertical direction based on the splitting shape information.

According to an embodiment, a depth of the second coding units 1412a, 1412b, 1414a, and 1414b, which are determined based on the splitting shape information of the non-square first coding unit 1410 or 1420, may be determined based on the length of a long side thereof. For example, since the length of a side of the square second coding units 1412a and 1412b is 1/2 times the length of a side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the decoder 130 may split the non-square first coding unit 1410 into an odd number of second coding units 1414a, 1414b, and 1414c based on the splitting shape information. The odd number of second coding units 1414a, 1414b, and 1414c may include the non-square second coding units 1414a and 1414c and the square second coding unit 1414b. In this case, since the length of a long side of the non-square second coding units 1414a and 1414c and the length of a side of the square second coding unit 1414b are 1/2 times the length of a side of the first coding unit 1410, a depth of the second coding units 1414a, 1414b, and 1414c may be D+1 which is deeper than the depth D of the non-square first coding unit 1410 by 1. The decoder 130 may determine depths of coding units split from the first coding unit 1420 having a non-square shape, a width of which is longer than a height, by using the above-described method of determining depths of coding units split from the first coding unit 1410.

According to an embodiment, the decoder 130 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b of the center location may include two of the other coding unit 1414a or 1414c. Therefore, assuming that a PID of the coding unit 1414b of the center location is 1 based on a scan order, a PID of the coding unit 1414c located next to the coding unit 1414b may be increased by 2 and thus may be 3. That is, discontinuity in PID values may be present. According to an embodiment, the decoder 130 may determine whether an odd number of split coding units do not have equal sizes, based on whether discontinuity is present in PIDs for identifying the split coding units.

### Determining tri-split using PID

According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs to identify a plurality of coding units. According to an embodiment, the PID may be obtained from a sample of a predetermined location of each coding unit (e.g., a top left sample).

According to an embodiment, the image decoding apparatus 100 may determine a coding unit of a predetermined location among the split coding units, by using the PIDs for identifying the coding units. According to an embodiment, when the splitting shape information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit of a center location among the coding units. The image decoding apparatus 100 may determine the coding unit 1414b having a PID corresponding to a middle value among the PIDs of the coding units, as the coding unit of the center location among the coding units determined by splitting the first coding unit 1410. According to an embodiment, the image decoding apparatus 100 may determine PIDs for identifying split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 414a and 1414c. In this case, assuming that the PID of the coding unit 1414b of the center location is 1, the PID of the coding unit 1414c located next to the coding unit 1414b may be increased by 2 and thus may be 3. When the PID is not uniformly increased as described above, the image decoding apparatus 100 may determine that a coding unit is split into a plurality of coding units including a coding unit having a size different from that of the other coding units. According to an embodiment, when the splitting shape information indicates to split a coding unit into an odd number of coding units, the image decoding apparatus 100 may split a current coding unit in such a manner that a coding unit of a predetermined location among an odd number of coding units (e.g., a coding unit of a centre location) has a size different from that of the other coding units. In this case, the image decoding apparatus 100, may determine the coding unit of the centre location, which has a different size, by using PIDs of the coding units. However, the PIDs and the size or location of the coding unit of the predetermined location are not limited to the above-described examples, and various PIDs and various locations and sizes of coding units may be used.

According to an embodiment, the decoder 130 may use a predetermined data unit where a coding unit starts to be recursively split.

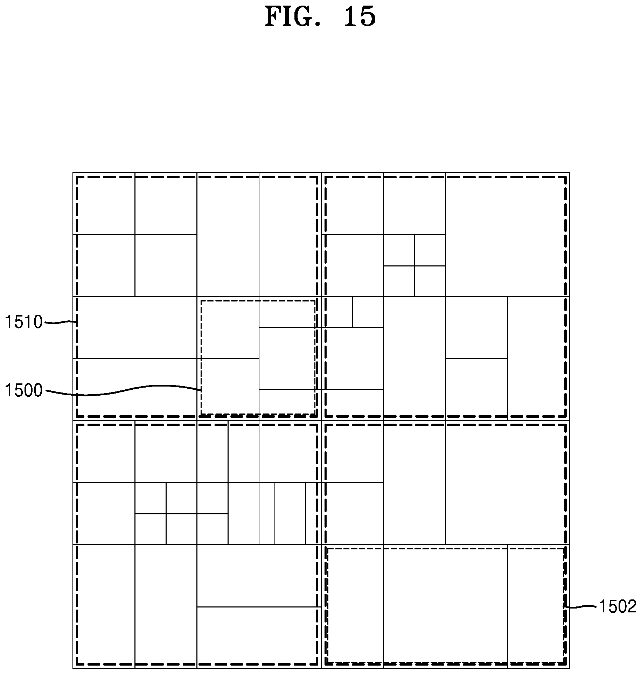

FIG. 15 shows that a plurality of coding units are determined based on a plurality of predetermined data units included in a picture, according to an embodiment.

According to an embodiment, a predetermined data unit may be defined as a data unit where a coding unit starts to be recursively split using at least one of block shape information and splitting shape information. That is, the predetermined data unit may correspond to a coding unit of an uppermost depth, which is used to determine a plurality of coding units split from a current picture. In the following description, for convenience of explanation, the predetermined data unit is referred to as a reference data unit.

According to an embodiment, the reference data unit may have a predetermined size and shape. According to an embodiment, a reference coding unit may include M×N samples. Herein, M and N may be equal values, and may be integers expressed as multipliers of 2. That is, the reference data unit may have a square or non-square shape, and may be an integer number of coding units.

According to an embodiment, the decoder 130 of the image decoding apparatus 100 may split the current picture into a plurality of reference data units. According to an embodiment, the decoder 130 may split the plurality of reference data units, which are split from the current picture, by using splitting information of each reference data unit. The operation of splitting the reference data unit may correspond to a splitting operation using a quadtree structure.

According to an embodiment, the decoder 130 may previously determine the minimum size allowed for the reference data units included in the current picture. As such, the decoder 130 may determine various reference data units having sizes equal to or greater than the minimum size, and determine one or more coding units by using the block shape information and the splitting shape information with reference to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, and largest coding units).

According to an embodiment, the bitstream obtainer 120 of the image decoding apparatus 100 may obtain, from a bitstream, at least one of reference coding unit shape information and reference coding unit size information with respect to each of the various data units. An operation of determining at least one coding unit included in the square reference coding unit 1500 has been described above in relation to the operation of splitting the current coding unit 300 of FIG. 3, and an operation of determining at least one coding unit included in the non-square reference coding unit 1502 has been described above in relation to the operation of splitting the current coding unit 400 or 450 of FIG. 4. Thus, detailed descriptions thereof will not be provided herein.

According to an embodiment, the decoder 130 may use a PID for identifying the size and shape of reference coding units, to determine the size and shape of reference coding units according to some data units previously determined based on a predetermined condition. That is, the bitstream obtainer 120 may obtain, from the bitstream, only the PID for identifying the size and shape of reference coding units with respect to each slice, slice segment, or largest coding unit which is a data unit satisfying a predetermined condition (e.g., a data unit having a size equal to or smaller than a slice) among the various data units (e.g., sequences, pictures, slices, slice segments, and largest coding units). The decoder 130 may determine the size and shape of reference data units with respect to each data unit, which satisfies the predetermined condition, by using the PID. When the reference coding unit shape information and the reference coding unit size information are obtained and used from the bitstream with respect to each data unit having a relatively small size, since efficiency of using the bitstream may not be good, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the decoder 130 may determine at least one of the size and shape of reference coding units included in a data unit serving as a unit for obtaining the PID, by selecting the previously determined at least one of the size and shape of reference coding units based on the PID.

According to an embodiment, the decoder 130 may use one or more reference coding units included in a largest coding unit. That is, a largest coding unit split from a picture may include one or more reference coding units, and coding units may be determined by recursively splitting each reference coding unit. According to an embodiment, at least one of a width and height of the largest coding unit may be integer times at least one of the width and height of the reference coding units. According to an embodiment, the size of reference coding units may be obtained by splitting the largest coding unit n times based on a quadtree structure. That is, the decoder 130 may determine the reference coding units by splitting the largest coding unit n times based on a quadtree structure, and split the reference coding unit based on at least one of the block shape information and the splitting shape information according to various embodiments.

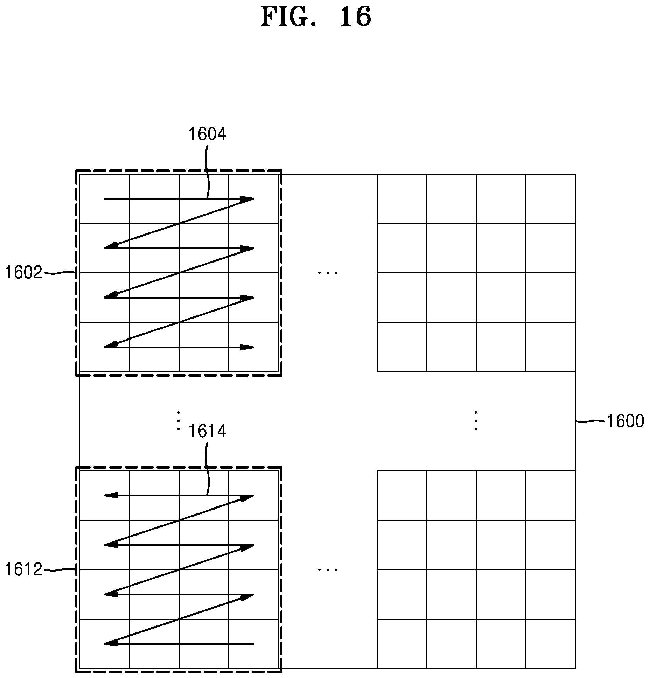

FIG. 16 shows a processing block serving as a unit for determining a determination order of reference coding units included in a picture 1600, according to an embodiment.

According to an embodiment, the decoder 130 may determine one or more processing blocks split from a picture. The processing block is a data unit including one or more reference coding units split from a picture, and the one or more reference coding units included in the processing block may be determined in a specific order. That is, a determination order of one or more reference coding units determined in each processing block may correspond to one of various shapes of orders for determining reference coding units, and may vary depending on the processing block. The determination order of reference coding units, which is determined with respect to each processing block, may be one of various orders, e.g., raster scan order, Z-scan, N-scan, up-right diagonal scan, horizontal scan, and vertical scan, but is not limited to the above-mentioned scan orders.

According to an embodiment, the decoder 130 may obtain processing block size information and determine the size of one or more processing blocks included in the picture. The decoder 130 may obtain the processing block size information from a bitstream and determine the size of one or more processing blocks included in the picture. The size of processing blocks may be a predetermined size of data units, which is indicated by the processing block size information.

According to an embodiment, the bitstream obtainer 120 of the image decoding apparatus 100 may obtain the processing block size information from the bitstream with respect to each specific data unit. For example, the processing block size information may be obtained from the bitstream in a data unit such as image, sequence, picture, slice, or slice segment. That is, the bitstream obtainer 120 may obtain the processing block size information from the bitstream with respect to each of the various data units, and the decoder 130 may determine the size of one or more processing blocks, which are split from the picture, by using the obtained processing block size information. The size of processing blocks may be integer times that of the reference coding units.

According to an embodiment, the decoder 130 may determine the size of processing blocks 1602 and 1612 included in the picture 1600. For example, the decoder 130 may determine the size of processing blocks based on the processing block size information obtained from the bitstream. Referring to FIG. 16, according to an embodiment, the decoder 130 may determine a width of the processing blocks 1602 and 1612 to be four times the width of the reference coding units, and determine a height of the processing blocks 1602 and 1612 to be four times the height of the reference coding units. The decoder 130 may determine a determination order of one or more reference coding units in one or more processing blocks.

According to an embodiment, the decoder 130 may determine the processing blocks 1602 and 1612, which are included in the picture 1600, based on the size of processing blocks, and a reference coding unit determiner 12 may determine a determination order of one or more reference coding units in the processing blocks 1602 and 1612. According to an embodiment, determination of reference coding units may include determination of the size of reference coding units.

According to an embodiment, the decoder 130 may obtain, from the bitstream, determination order information of one or more reference coding units included in one or more processing blocks, and determine a determination order to one or more reference coding units based on the obtained determination order information. The determination order information may be defined as an order or direction for determining the reference coding units in the processing block. That is, the determination order of reference coding units may be independently determined with respect to each processing block.

According to an embodiment, the image decoding apparatus 100 may obtain the determination order information of reference coding units from the bitstream with respect to each specific data unit. For example, the bitstream obtainer 120 may obtain the determination order information of reference coding units from the bitstream with respect to each data unit such as image, sequence, picture, slice, slice segment, or processing block. Since the determination order information of reference coding units indicates an order for determining reference coding units in a processing block, the determination order information may be obtained with respect to each specific data unit including an integer number of processing blocks.

According to an embodiment, the image decoding apparatus 100 may determine one or more reference coding units based on the determined determination order.

According to an embodiment, the bitstream obtainer 120 may obtain the determination order information of reference coding units from the bitstream as information related to the processing blocks 1602 and 1612, and the decoder 130 may determine a determination order of one or more reference coding units included in the processing blocks 1602 and 1612and determine one or more reference coding units, which are included in the picture 1600, based on the determination order. Referring to FIG. 16, the decoder 130 may determine determination orders 1604 and 1614 of one or more reference coding units in the processing blocks 1602 and 1612, respectively. For example, when the determination order information of reference coding units is obtained with respect to each processing block, different shapes of the determination order information of reference coding units may be obtained for the processing blocks 1602 and 1612. When the determination order 1604 of reference coding units in the processing block 1602 is a raster scan order, reference coding units included the processing block 1602 may be determined in a raster scan order. Unlike this, when the determination order 1614 of reference coding units in the other processing block 1612 is an inverse raster scan order, reference coding units included in the processing block 1612 may be determined in an inverse raster scan order.

According to an embodiment, the decoder 130 may decode the determined one or more reference coding units. The decoder 130 may decode the picture based on the reference coding units determined as described above. A method of decoding the reference coding units may include various image decoding methods.

According to an embodiment, the image decoding apparatus 100 may obtain block shape information indicating the shape of a current coding unit or splitting shape information indicating a splitting method of the current coding unit, from the bitstream, and use the obtained information. The block shape information or the splitting shape information may be included in the bitstream related to various data units. For example, the decoder 130 may use the block shape information or the splitting shape information included in a sequence parameter set, a picture parameter set, a video parameter set, a slice header, or a slice segment header. Furthermore, the decoder 130 may obtain syntax corresponding to the block shape information or the splitting shape information from the bitstream with respect to each largest coding unit, reference coding unit, or processing block, and use the obtained syntax.

According to an embodiment, the decoder 130 may differently determine a kind of a splitting shape in which a coding unit may be divided according to each predetermined data unit. According to an embodiment, the decoder 130 of the image decoding apparatus 100 may differently determine a combination of shapes in which the coding unit may be divided according to each predetermined data unit (e.g., sequence, picture, slice, etc.)

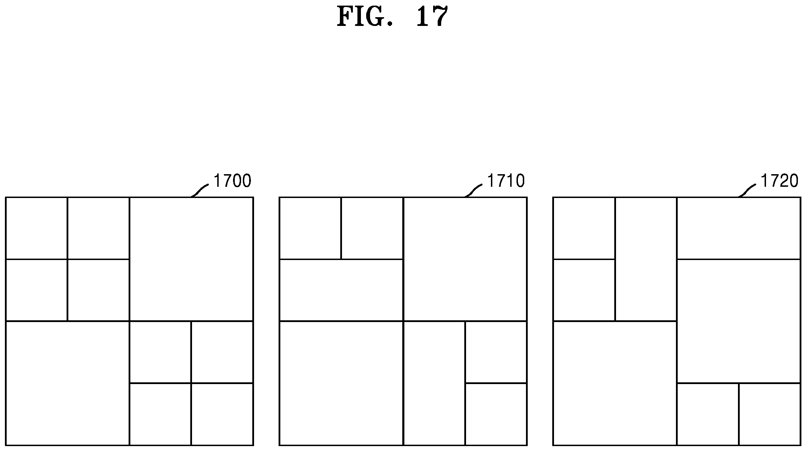

FIG. 17 is a diagram of coding units that may be determined for each picture, in a case where pictures have different combinations of split types of a coding unit from one another.

Referring to FIG. 17, the decoder 130 may determine the combination of the split types of the coding unit to be different according to each picture. For example, the decoder 130 may decode an image by using a picture 1700 that may be split into four coding units, a picture 1710 that may be split into two or four coding units, and a picture 1720 that may be split into two, three, or four coding units, from among one or more pictures included in the image. The decoder 130 may only use split type information representing splitting into four square coding units, to split the picture 1700 into a plurality of coding units. The decoder 130 may only use split type information representing splitting into two or four coding units, to split the picture 1710. The decoder 130 may only use split type information representing splitting into two, three, or four coding units, to split the picture 1720. The above-described combination of the split types is an example for describing operations of the image decoding apparatus 100, and thus, the combination of the split types is not limited to the above embodiment, and it is interpreted that various combinations of split types may be used with respect to a predetermined data unit.

According to an embodiment, the bitstream obtainer 120 of the image decoding apparatus 100 may obtain a bitstream including an index representing the combination of the split type information, for every predetermined data unit (e.g., a sequence, a picture, a slice, etc.) For example, the bitstream obtainer may obtain an index representing the combination of the split type information from a sequence parameter set, a picture parameter set, or a slice header. The decoder 130 of the image decoding apparatus 100 may determine the combination of split types of the coding unit with respect to every predetermined data unit by using the obtained index, and accordingly, the data units may use different combinations of the split types from one another.

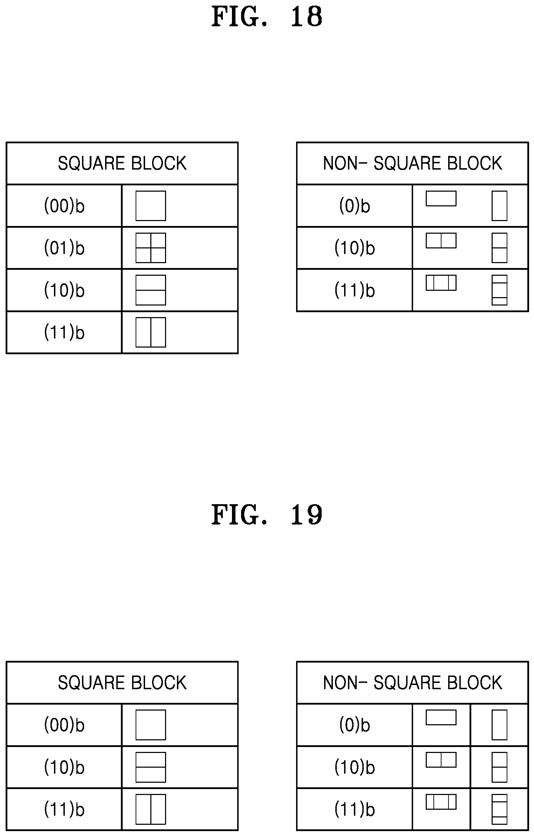

FIG. 18 is a diagram showing various types of coding unit that may be determined based on split type information expressed in a binary code, according to an embodiment.

According to an embodiment, the image decoding apparatus 100 may split the coding unit as various types by using block type information and split type information obtained by the bitstream obtainer 120. The split types of the coding unit may include various types including the above-described types in the above embodiment.

Referring to FIG. 18, the decoder 130 may split the coding unit of a square type in one of a horizontal direction and a vertical direction based on the split type information, and may split a coding unit of non-square shape in a horizontal or vertical direction.

When the decoder 130 may split a coding unit of a square shape in a horizontal direction and a vertical direction into four coding units of square shape according to an embodiment, split type information about the coding unit of the square shape may indicate four kinds of split types. According to an embodiment, the split type information may be expressed as a binary code of two digits, and a binary code may be allocated to each of split types. For example, when the coding unit is not split, the split type information may be expressed as (00)b. When the coding unit is split in a horizontal direction and a vertical direction, the split type information may be expressed as (01)b. When the coding unit is split in the horizontal direction, the split type information may be expressed as (10)b. When the coding unit is split in the vertical direction, the split type information may be expressed as (11)b.

According to an embodiment, when the decoder 130 splits a coding unit of a non-square shape in a horizontal direction or a vertical direction, kinds of split types that the split type information may represent may be determined according to how many coding units are split. Referring to FIG. 18, the decoder 130 may split a coding unit of a non-square shape up to three pieces, according to an embodiment. The decoder 130 may split the coding unit into two coding units, and in this case, the split type information may be expressed as (10)b. The decoder 130 may split the coding unit into three coding units, and in this case, the split type information may be expressed as (11)b. The decoder 130 may determine not to split the coding unit, and in this case, the split type information may be expressed as (0)b. That is, the decoder 130 may use a variable length coding (VLC), not a fixed length coding (FLC), to use the binary code representing the split type information.

Referring to FIG. 18 according to an embodiment, the binary code of the split type information representing that the coding unit is not split may be expressed as (0)b. In a case where the binary code of the split type information representing that the coding unit is not split is set as (00)b, the binary code of two-bits of the split type information has to be used even when there is no split type information set as (01)b. However, as shown in FIG. 18, when three kinds of split types are used with respect to the coding unit of non-square shape, the decoder 130 may determine not to split the coding unit even by using one-bit binary code (0)b as the split type information, and thus, the bitstream may be efficiently used. However, the split type of the coding unit of the non-square shape represented by the split type information is not limited to the three types shown in FIG. 18, but it is interpreted that the split type may include various types including the above-described embodiments.

FIG. 19 is a diagram showing another type of coding unit that may be determined based on split type information that may be expressed in a binary code, according to an embodiment.

Referring to FIG. 19, the decoder 130 may split the coding unit of the square shape in the horizontal or vertical direction based on the split type information, and may split the coding unit of the non-square shape in the horizontal or vertical direction. That is, the split type information may represent the coding unit of the square shape split in one direction. In this case, the binary code of the split type information representing that the coding unit of the square shape is not split may be expressed as (0)b. In a case where the binary code of the split type information representing that the coding unit is not split is set as (00)b, the binary code of two-bits of the split type information has to be used even when there is no split type information set as (01)b. However, as shown in FIG. 19, when three kinds of split types are used with respect to the coding unit of the square shape, the decoder 130 may determine not to split the coding unit even by using one-bit binary code (0)b as the split type information, and thus, the bitstream may be efficiently used. However, the split type of the coding unit of the square shape represented by the split type information is not limited to the three types shown in FIG. 19, but it is interpreted that the split type may include various types including the above-described embodiments.

According to an embodiment, the block type information or the split type information may be expressed by using the binary code, and such information may be directly generated as a bitstream. Also, the block type information expressed as the binary code may not be directly generated as a bitstream, but may be used as a binary code input in a context adaptive binary arithmetic coding (CABAC).

According to an embodiment, a process in which the image decoding apparatus 100 obtains a syntax about the block type information or the split type information through the CABAC will be described. A bitstream including a binary code about the syntax may be obtained via a bitstream obtainer. The decoder 130 may detect a syntax element representing the block type information or the split type information by inverse-quantizing a bin string included in the obtained bitstream. According to an embodiment, the decoder 130 obtains a set of binary bin strings corresponding to a syntax element to be decoded, and decodes each of bins. In addition, the decoder 130 may repeatedly perform the above operation until a bin string of decoded bins is equal to or one of previously calculated bin strings. The decoder 130 may determine the syntax element by performing an inverse-binarization of the bin string.

According to an embodiment, the decoder 130 may determine the syntax of the bin string by performing a decoding operation of an adaptive binary arithmetic coding, and the decoder 130 may update a probability model of the bins obtained by the bitstream obtainer. Referring to FIG. 18, the bitstream obtainer 120 of the image decoding apparatus 100 may obtain a bitstream representing the binary code indicating the split type information, according to an embodiment. The decoder 130 may determine a syntax about the split type information by using the obtained binary code having one-bit or two-bits size. The decoder 130 may update a probability with respect to each bit in the two-bit binary code, to determine the syntax about the split type information. That is, the decoder 130 may update a probability of having a value of 0 or 1 when decoding a next bin, according to the value that a first bin has, that is, 0 or 1, in the two-bit binary code.

According to an embodiment, when determining the syntax, the decoder 130 may update probabilities of the bins used in decoding the bins in the bin string about the syntax, and the decoder 130 may determine that a probability for a certain bit in the bin string is not updated and the same probability maintains.

Referring to FIG. 18, in the process of determining the syntax by using the bin string representing the split type information of the coding unit of the non-square shape, the decoder 130 may determine the syntax about the split type information by using one bin having a value of 0 when the coding unit of the non-square shape is not split. That is, when the block type information represents that the current coding unit has a non-square shape, the first bin in the bin string of the split type information may have a value of 0 when the coding unit of the non-square shape is not split and may have a value of 1 when the coding unit of the non-square shape is split into two or three coding units. Accordingly, a probability that the first bin in the bin string of the split type information about the coding unit of the non-square shape has a value of 0 may be 1/3, and a probability of having a value 1 may be 2/3. As described above, since the split type information representing that the coding unit of the non-square shape is not split may be expressed only by the bin string of one bit having a value of 0, the decoder 130 may determine the syntax of the split type information by determining whether the second bin has a value 0 or 1 only when the first bin of the split type information has a value of 1. According to an embodiment, when the first bin with respect to the split type information has a value of 1, the decoder 130 may decode the bin under an assumption that a probability that the second bin has a value of 0 and a probability of having a value of 1 are equal to each other.

According to an embodiment, the image decoding apparatus 100 may use various probabilities with respect to each bin when determining the bin of the bin string about the split type information. According to an embodiment, the decoder 130 may determine the probability of the bin with respect to the split type information differently depending on the direction of a non-square block. According to an embodiment, the decoder 130 may determine the probability of the bin with respect to the split type information to be different according to an area or a length of a longer side of the current coding unit. According to an embodiment, the decoder 130 may determine the probability of the bin with respect to the split type information to be different according to at least one of a shape and a length of a longer side of the current coding unit.

According to an embodiment, the decoder 130 may determine that the probabilities of the bins with respect to the split type information are equal to each other, with respect to coding units of a predetermined size or greater. For example, with respect to the coding units having a size of 64-sample or greater based on a length of a longer side of the coding unit, it may be determined that the probabilities of the bins of the split type information are equal to one another.

According to an embodiment, the decoder 130 may determine initial probabilities of bins configuring a bin string of the split type information based on a slice type (e.g., an I slice, a P slice, or a B slice).

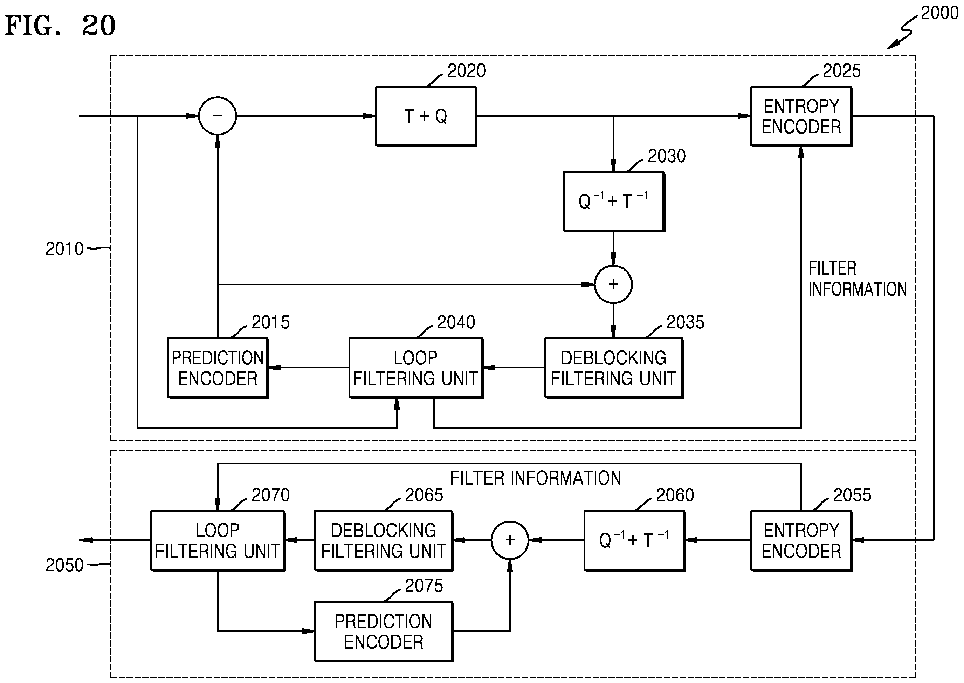

FIG. 20 is a block diagram of an image encoding and decoding system performing loop filtering.

An encoding terminal 2010 of an image encoding and decoding system 2000 transfers an encoded bitstream of an image, and a decoding terminal 2050 receives and decodes the bitstream to output a reconstructed image. Here, the encoding terminal 2010 may be an element similar to an image encoding apparatus 200 that will be described later, and the decoding terminal 2050 may be an element similar to the image decoding apparatus 100.

In the encoding terminal 2010, a prediction encoder 2015 outputs a reference image through an inter prediction and an intra prediction, and a transformation and quantization unit 2020 quantizes residual data between the reference image and a current input image into a quantized transformation coefficient and outputs the quantized transformation coefficient. An entropy encoder 2025 encodes and transforms the quantized transformation coefficient, and outputs a bitstream. The quantized transformation coefficient is reconstructed as data of a spatial domain through an inverse-quantization and inverse-transformation unit 2030, and the reconstructed data of the spatial domain is output as a reconstructed image through a deblocking filtering unit 2035 and a loop filtering unit 2040. The reconstructed image may be used as a reference image of a next input image, after passing through a prediction encoder 2015.

In the bitstream received by the decoding terminal 2050, encoded image data is reconstructed as residual data of a spatial domain through an entropy decoder 2055 and the inverse-quantization and inverse-transformation unit 2060. The reference image and residual data output from a prediction decoder 2075 are combined to configure image data of a spatial domain, and a deblocking filtering unit 2065 and a loop filtering unit 2070 perform filtering operations on the image data of the spatial domain to output a reconstructed image of a current original image. The reconstructed image may be used as a reference image of a next original image by the prediction decoder 2075.

The loop filtering unit 2040 of the encoding terminal 2010 may perform loop filtering by using filter information input by a user or input according to a system setting. The filter information used by the loop filtering unit 2040 is output to the entropy encoder 2010, and then is transferred to the decoding terminal 2050 with the encoded image data. The loop filtering unit 2070 of the decoding terminal 2050 may perform loop filtering based on the filter information input to the decoding terminal 2050.

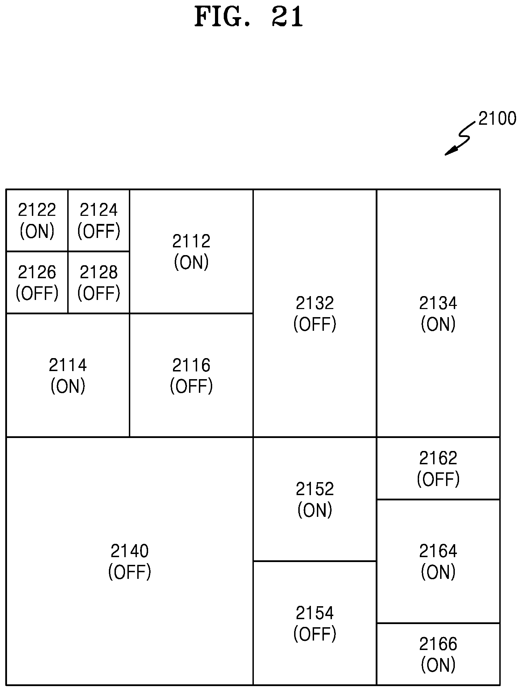

FIG. 21 is a diagram showing examples of filtering units included in a largest coding unit and filtering execution information of the filtering units, according to an embodiment.

When filtering units of the loop filtering unit 2040 of the encoding terminal 2010 and the loop filtering unit 2070 of the decoding terminal 2050 include data units that are similar to the coding units according to an embodiment illustrated with reference to FIGS. 3 to 5, the filtering information may include block type information and split type information of a data unit for representing the filtering unit, and loop filtering execution information representing whether to perform the loop filtering on the filtering unit.

The filtering units included in a largest coding unit 2100 according to an embodiment may have the same block type and split type as those of the coding units included in the largest coding unit 2100. Also, the filtering units included in the largest coding unit 2100 according to an embodiment may be split, based on sizes of the coding units included in the largest coding unit 2100. Referring to FIG. 21, for example, filtering units may include a filtering unit 2140 of a square shape having a depth D, filtering units 2132 and 2134 of a non-square shape having a depth D, filtering units 2112, 2114, 2116, 2152, 2154, and 2164 of the square shape having a depth D+1, filtering units 2162 and 2166 of the square shape having a depth D1+1, and filtering units 2122, 2124, 2126, and 2128 of the square shape having a depth D+2.

Block type information, split type information (depth), and loop filtering execution information of the filtering units included in the largest coding unit 2100 may be encoded as shown in Table 1 below.

**[Table 1]**

| Depth | Block Shape Information | Loop Filtering Execution Information |
|---|---|---|
| D | 0: SQUARE | 0(2140) |
| | 1: NS_VER | 0(2132), 1(2134) |
| | 2: NS_HOR | |
| D+1 | 0: SQUARE | 1(2112), 1(2114), 0(2116), 1(2152), 0(2154), 1(2164) |
| | 1: NS_VER | |
| | 2: NS_HOR | 0(2162), 1(2166) |
| D+2 | 0: SQUARE | 1(2122), 0(2124), 0(2126), 0(2128) |
| | 1: NS_VER | |
| | 2: NS_HOR | |

Processes of recursively splitting the coding unit to determine a plurality of coding units according to the block type information and the block split information according to an embodiment are as above descriptions with reference to FIG. 13. In the loop filtering execution information of the filtering units according to an embodiment, when a flag value is 1, it represents that the loop filtering is performed on the corresponding filtering unit, and when the flag value is 0, it represents that the loop filtering is not performed. Referring to Table 1 above, information of the data unit for determining the filtering unit that is the filtering target of the loop filtering units 2040 and 2070 may be all encoded as filtering information and transferred.

The coding units configured according to an embodiment are to minimize an error with the original image, and thus, are expected to have high spatial relation therebetween. Therefore, since the filtering units are determined based on the coding unit according to an embodiment, an operation of determining the filtering unit separately from the determination of the coding unit may be omitted. Accordingly, since the filtering unit is determined based on the coding unit according to an embodiment, information for determining a split type of the filtering unit may be omitted, and thus, a transmission bitrate of the filtering information may be reduced.

In the above embodiment, it is described that the filtering unit is determined based on the coding unit according to an embodiment, splitting of the filtering unit is performed based on the coding unit, and then, the filtering unit is no longer split at an arbitrary depth and the type of the filtering unit at the corresponding depth may be determined.

The determination of the filtering unit described above with reference to the above embodiment may be applied to various embodiments such as deblocking filtering, adaptive loop filtering, etc., as well as the loop filtering.

The image decoding apparatus 100 according to an embodiment may split the current coding unit by using at least one of the block type information and the split type information, and the block type information may be determined in advance to use only the square type and the split type information may be determined in advance not to split or to represent that the coding unit may be split into four square coding units. That is, according to the block type information, the current coding unit has the square shape, and may not be split or may be split into four square coding units according to the split type information. The image decoding apparatus 100 may obtain a bitstream, the bitstream being generated by a predetermined encoding method determined in advance to only use the above block type and the split type, through the bitstream obtainer, and the decoder 130 may only use the block type and the split type determined in advance. In this case, the image decoding apparatus 100 may address a compatibility issue with a predetermined encoding method, by using a predetermined decoding method similar to the above-described encoding method. According to an embodiment, when the image decoding apparatus 100 uses the above-described predetermined decoding method that only uses predetermined block type and split type from among various types represented by the block type information and the split type information, the block type information only represents the square shape, and thus, the image decoding apparatus 100 may omit a process of obtaining the block type information from the bitstream. A syntax representing whether to use the above-described predetermined decoding method may be used, and the syntax may be obtained from a bitstream for each of data units of various shapes including a plurality of coding units, e.g., a sequence, a picture, a slice unit, a largest coding unit, etc. That is, the bitstream obtainer 120 may determine whether to obtain the syntax representing the block type information from the bitstream, based on a syntax representing whether to use the predetermined decoding method.

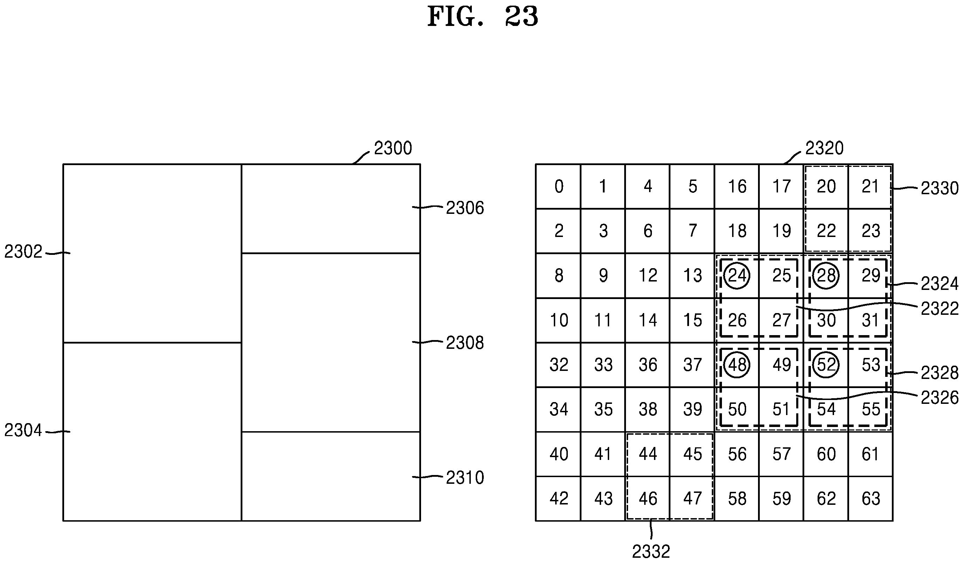

FIG. 23 is a diagram showing an index according to a Z-scanning order of coding units according to an embodiment.

The image decoding apparatus 100 according to an embodiment may scan lower data units included in an upper data unit in a Z-scanning order. Also, the image decoding apparatus 100 according to an embodiment may sequentially access data according to Z-scan indexes in the coding unit included in the largest coding unit or a processing block.

The image decoding apparatus 100 according to an embodiment may split a reference coding unit into at least one coding unit, as described above with reference to FIGS. 3 and 4. Here, in the reference coding unit, coding units of the square shape and coding units of the non-square shape may mixedly exist. The image decoding apparatus 100 according to an embodiment may access data according to the Z-scan index included in each coding unit in the reference coding unit. Here, a way of applying the Z-scan index may vary depending on whether there is a non-square shape coding unit in the reference coding unit.

According to an embodiment, when the coding unit of the non-square shape does not exist in the reference coding unit, coding units of a lower depth in the reference coding unit may have successive Z-scan indexes. For example, a coding unit of an upper depth may include four coding units of a lower depth, according to an embodiment. Here, four coding units of the lower depth may have successive boundaries among them, and the coding units of the lower depth may be scanned in the Z-scanning order according to the indexes representing the Z-scanning order. The indexes representing the Z-scanning order according to an embodiment may be set as increasing numbers according to the Z-scanning order with respect to the coding units. In this case, deeper coding units of an identical depth may be scanned according to the Z-scanning order.

According to an embodiment, when there is at least one coding unit of the non-square shape in the reference coding unit, the image decoding apparatus 100 splits each of the coding units in the reference coding unit into sub-blocks and performs scanning operation on the split sub-blocks in the Z-scanning order. For example, when there is the coding unit of the non-square shape in the vertical or horizontal direction in the reference coding unit, the Z-scanning may be performed by using split sub-blocks. In addition, for example, the reference coding unit is split into odd-numbered coding units, the Z-scanning may be performed by using the sub-blocks. The sub-block is obtained by splitting the coding unit that is no longer split or an arbitrary coding unit, and may have a square shape. For example, the coding unit of the square shape may be split into four square sub-blocks. Also, for example, the coding unit of the non-square shape may be split into two square sub-blocks.

Referring to FIG. 23, for example, the image decoding apparatus 100 according to an embodiment may scan coding units 2302, 2304, 2306, 2308, and 2310 of lower depth in the Z-scanning order in a coding unit 2300. The coding unit 2300 and the coding units 2302, 2304, 2306, 2308, and 2310 are respectively an upper coding unit and lower coding units, relative to each other. The coding unit 2300 includes the coding units 2306 and 2310 of the non-square shape in the horizontal direction. The coding units 2306 and 2310 of the non-square shape have discontinuous boundaries with adjacent coding units 2302 and 2304 of the square shape. Also, the coding unit 2308 has a square shape, and is intervened between odd-numbered coding units split from the coding unit of the non-square shape. Like the coding units 2306 and 2310 of the non-square shape, the coding unit 2308 has discontinuous boundaries with adjacent coding units 2302 and 2304 of the square shape. When the non-square coding units 2306 and 2310 are included in the coding unit 2300 or the coding unit 2308 intervened among the odd-numbered coding units split from the non-square coding unit is included in the coding unit 2300, adjacent boundaries between the coding units are discontinuous, and thus, successive Z-scan indexes may not be set. Therefore, the image decoding apparatus 100 may split the coding units as sub-blocks and set the Z-scan indexes successively. Also, the image decoding apparatus 100 may perform successive Z-scanning operations on the coding units 2306 and 2310 of the non-square shape or the coding unit 2308 intervened among the odd-numbered coding units of the non-square shape.

A coding unit 2320 shown in FIG. 23 is obtained by splitting the coding units 2302, 2304, 2306, 2308, and 2310 in the coding unit 2300 into sub-blocks. A Z-scan index may be set with respect to each of the sub-blocks, and adjacent boundaries between the sub-blocks are continuous. Thus, the sub-blocks may be scanned in the Z-scanning order. For example, the coding apparatus according to an embodiment may split the coding unit 2308 as sub-blocks 2322, 2324, 2326, and 2328. Here, the sub-blocks 2322 and 2324 may be scanned after processing data on a sub-block 2330, and the sub-blocks 2326 and 2328 may be scanned after processing data on a sub-block 2332. Also, the sub-blocks may be scanned in the Z-scanning order.

In the above embodiment, the data units may be scanned according to the Z-scanning order for storing data, loading data, accessing data, etc.

Also, in the above embodiment, it is described that the data units may be scanned according to the Z-scanning order, but the data units may be scanned in various scanning orders, e.g., a raster scanning, an N scanning, an upper and right diagonal scanning, a horizontal scanning, a vertical scanning, etc., and may not be limited to the Z-scanning order.

Also, in the above embodiment, it is described that the coding units in the reference coding unit are scanned, but is not limited thereto, but it is not limited to the above example, that is, a target to be scanned may be the largest coding unit or an arbitrary block in a processing block.

Also, in the above embodiment, only when there is at least one of non-square block, the block is split into sub-blocks to be scanned according to the Z-scanning order. However, even when there is no non-square block for simplified implementation, the block may be split into sub-blocks to be scanned according to the Z-scanning order.

The image decoding apparatus 100 according to an embodiment may generate prediction data by performing an inter prediction or intra prediction on a coding unit, may generate residual data by performing an inverse-transformation on a transformation unit included in a current coding unit, and may reconstruct the current coding unit by using the prediction data and the residual data.

A prediction mode of the coding unit according to an embodiment may be at least one of an intra mode, an inter mode, and a skip mode. According to an embodiment, the prediction mode may be independently selected with respect to each coding unit.

For example, when a coding unit of 2Nx2N is split and becomes two 2NxN or two Nx2N coding units, a prediction in the inter mode and a prediction in the intra mode may be separately performed on the coding units. In addition, the skip mode may be applied to the coding unit of 2NxN or Nx2N according to an embodiment.

Meanwhile, according to an embodiment, in the image decoding apparatus 100, a bi-prediction may be allowed on a coding unit of 8x4 or 4x8 in the skip mode. In the skip mode, skip mode information about the coding unit is only transferred, and thus, usage of residual data on the corresponding coding unit may be omitted. Therefore, overhead of the inverse-quantization and inverse-transformation may be reduced. Instead, the image decoding apparatus 100 according to an embodiment allows the bi-prediction on a coding unit to which the skip mode is applied, to improve a decoding efficiency. Also, the image decoding apparatus 100 according to an embodiment allows the bi-prediction on the coding unit of 8x4 or 4x8, but sets relatively smaller number of interpolation taps in a motion compensation process to efficiently use a memory bandwidth. As an example, instead of using an interpolation filter of 8-tap, an interpolation filter having taps less than 8 (e.g., 2-tap interpolation filter) may be used.

Also, the image decoding apparatus 100 according to an embodiment may split a region included in a current coding unit in a predetermined type (e.g., an oblique-based split), and may perform signaling of intra prediction or intra prediction information about each split region.

The image decoding apparatus 100 according to an embodiment may obtain a prediction sample of a current coding unit by using peripheral samples of the current coding unit in the intra mode. Here, in the intra prediction, the prediction is performed by using peripheral samples that have been reconstructed, and the samples are referred to as reference samples.

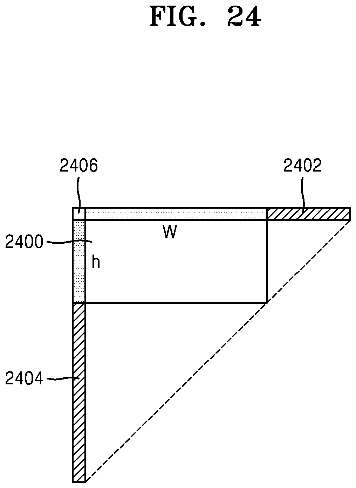

FIG. 24 is a diagram of a reference sample for intra prediction of a coding unit, according to an embodiment. Referring to FIG. 24, with respect to the current coding unit 2300 having a non-square block shape, a length w in a horizontal direction, and a length h in a vertical direction, w+h reference samples above the coding unit 2300, w+h reference samples at a left side of the coding unit 2300, and one reference sample at upper left side of the coding unit 2300, that is, total 2(w+h)+1 reference samples are necessary. To prepare the reference samples, a process of performing a padding on a portion where the reference sample does not exist is performed, and a reference sample filtering process for each prediction mode may be performed to reduce quantization error in a reconstructed reference sample.

In the above embodiment, the number of reference samples in a case where the block type of the current coding unit is non-square shape, but the number of the reference samples may be equally applied to a case where the block type of the current coding unit is a square shape.

The above-described embodiments illustrate operations related to the image decoding method performed by the image decoding apparatus 100. Hereinafter, operations of the image encoding apparatus 200 performing an image encoding method corresponding to inverse-processes of the image decoding method will be described below with reference to various embodiments.

FIG. 2 illustrates a block diagram of an image encoding apparatus 200 capable of encoding an image based on at least one of block shape information and splitting shape information, according to an embodiment.

Referring to FIG. 2, according to an embodiment, the image encoding apparatus 200 may include a bitstream generator 210 for generating a bitstream including predetermined information such as the splitting shape information and the block shape information and an encoder 220 for encoding the image using the predetermined information. According to an embodiment, the encoder 220 of the image encoding apparatus 200 may determine at least one coding unit that splits the image based on at least one of the block shape information and the splitting shape information, and the bitstream generator 210 of the image encoding apparatus 200 may generate the bitstream including at least one of the block shape information and the splitting shape information. Here, the block shape information may mean information or syntax indicating a shape of a coding unit, and the splitting shape information may mean information or syntax indicating a shape in which the coding unit is split.

According to an embodiment, the encoder 220 of the image encoding apparatus 200 may determine the shape of the coding unit. For example, the coding unit may have a square or a non-square shape, and information indicating such a shape may be included in the block shape information

According to an embodiment, the encoder 220 may determine what shape of coding unit is to be split. The encoder 220 may determine a shape of at least one coding unit included in the coding unit, and the bitstream generator 210 may generate a bitstream including the splitting shape information including information about the shape of the coding unit.

According to an embodiment, the encoder 220 may determine whether to split the coding unit or not. When the encoder 220 determines that only one coding unit is included in the coding unit or that the coding unit is not split, the bitstream generator 210 may generate a bitstream including splitting shape information indicating that the coding unit is not split. The encoder 220 may split the coding unit into a plurality of coding units included in the coding unit, and the bitstream generator 210 may generate a bitstream including splitting shape information indicating that the coding unit is split into the plurality of coding units.

According to an embodiment, information indicating how many coding units the coding unit is split into or which direction the coding unit is split into may be included in the splitting shape information. For example, the splitting shape information may indicate that the coding unit is split in at least one of a vertical direction and a horizontal direction or that the coding unit is not split.

FIG. 3 illustrates a process of the image encoding apparatus 200 splitting a current coding unit 300 and determining at least one coding unit, according to an embodiment.

According to an embodiment, the encoder 220 may determine a shape of a coding unit. For example, the encoder 220 may determine the shape of the coding unit having an optimal rate distortion (RD) cost in consideration of the RD-cost.

According to an embodiment, the encoder 220 may determine that the current coding unit is a square shape and accordingly determine a shape in which the square coding unit is split. For example, the encoder 220 may determine whether to split the square coding unit, whether to split the square coding unit vertically, whether to split the square coding unit horizontally, or whether to split the square coding unit into 4 coding units. Referring to FIG. 3, the encoder 220 may not split a coding unit 310a having the same size as that of the current coding unit 300 or may determine split coding units 310b, 310c, 310d, etc. based on splitting shape information indicating a predetermined split method.

Referring to FIG. 3, according to an embodiment, the encoder 220 may determine two coding units 310b obtained by splitting the current coding unit 300 in a vertical direction. The the encoder 220 may determine two coding units 310c obtained by splitting the current coding unit 300 in a horizontal direction. The the encoder 220 may determine four coding units 310d obtained by splitting the current coding unit 300 in vertical and horizontal directions. However, splitting shapes in which a square coding unit is split may not be construed as limited to the above-described shapes and may include various shapes that splitting shape information may indicate. Predetermined splitting shapes in which the square coding unit is split will be described in detail below in relation to various embodiments.

According to an embodiment, the bitstream generator 210 of the image encoding apparatus 200 may generate a bitstream including splitting shape information indicating a shape of the current coding unit 300 split by the encoder 220.

FIG. 4 shows an operation of the image encoding apparatus 200 splitting a non-square coding unit and determining one or more coding units, according to an embodiment.

According to an embodiment, the encoder 220 may determine whether not to split the non-square current coding unit or to split the non-square current coding unit by using a predetermined splitting method. Referring to FIG. 4, the encoder 220 of a current coding unit 400 or 450 may not split the coding unit 460 having the same size as the current coding unit 400 or 450 or may determine coding units 420a, 420b, 430a, 430b, 430c, 470a, 470b, 480a, 480b, and 480c split according to a splitting method. The bitstream generator 210 of the image encoding apparatus 200 may generate a bitstream including splitting shape information indicating such a splitting shape. A predetermined splitting method of splitting a non-square coding unit will be described in detail below in relation to various embodiments.

According to an embodiment, the encoder 220 may determine a shape in which a coding unit is split. Referring to FIG. 4, the encoder 220 may determine the two coding units 420a and 420b, or 470a and 470b included in the current coding unit by splitting the current coding unit 400 or 450 and generate a bitstream including splitting shape information indicating such a splitting shape.

According to an embodiment, when the encoder 220 splits the non-square current coding unit 400 or 450, the encoder 220 may split the current coding unit 400 or 450 in consideration of a location of a long side of the non-square current coding unit 400 or 450. For example, the encoder 220 may determine a plurality of coding units by splitting current encoding unit 400 or 450 in a direction of splitting the long side of the current coding unit 400 or 450 considering a shape of the current coding unit 400 or 450 and the bitstream generator 210 may generate a bitstream including splitting shape information indicating such a splitting shape.

According to an embodiment, the encoder 220 may determine an odd number of coding units included in the current coding unit 400 or 450. For example, the encoder 220 may split the current coding unit 400 or 450 into three coding units 430a, 430b, and 430c or 480a, 480b, and 480c. According to an embodiment, the encoder 220 may determine an odd number of coding units included in the current coding unit 400 or 450, and all the determined coding units may not have the same size. For example, a predetermined coding unit 430b or 480b among the determined odd number of coding units 430a, 430b, and 430c or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c or 480a, 480b, and 480c may have different sizes.

According to an embodiment, the encoder 220 may determine an odd number of coding units included in the current coding unit 400 or 450, and put a predetermined restriction on at least one coding unit among the odd number of coding units generated by splitting the current coding unit 400 or 450. Referring to FIG. 4, the encoder 220 may set a decoding method of the coding unit 430b or 480b of a center location among the three coding units 430a, 430b, and 430c or 480a, 480b, and 480c generated by splitting the current coding unit 400 or 450, to be different from that of the other coding units 430a and 430c, or 480a and 480c. For example, the encoder 220 may restrict the coding unit 430b or 480b of the center location to be no more split or to be split by only a predetermined number of times, unlike the other coding units 430a and 430c, or 480a and 480c.

FIG. 5 shows an operation of the image encoding apparatus 200 splitting a coding unit, according to an embodiment.

According to an embodiment, the encoder 220 may determine to or not to split a square first coding unit 500 into coding units. According to an embodiment, the encoder 220 may determine a second coding unit 510 by splitting the first coding unit 500 in a horizontal direction. According to an embodiment, a first coding unit, a second coding unit, and a third coding unit are terms used to understand the relationship before and after splitting between coding units. For example, the second coding unit may be determined by splitting the first coding unit, and the third coding unit may be determined by splitting the second coding unit. It will be understood below that the relationship of the first, second, and third coding units follows the above-described characteristic.

According to an embodiment, the image encoding apparatus 200 may determine to or not to split the determined second coding unit 510 into coding units, based on at least one of block shape information and splitting shape information. Referring to FIG. 5, the encoder 220 may or may not split the non-square second coding unit 510, which is determined by splitting the first coding unit 500, into one or more third coding units 520a, 520b, 520c, 1220d, etc. based on at least one of the block shape information and the splitting shape information. The bitstream generator 210 of the image encoding apparatus 200 may generate a bitstream including at least one of the block shape information and the splitting shape information and the encoder 220 may generate a plurality of various shape second coding units (e.g., 510) by splitting the first coding unit 500 based on at least one of the block shape information and the splitting shape information, and the second coding unit 510 may be split by using a method by which the first coding unit 500 is split based on at least one of the block shape information and the splitting shape information. According to an embodiment, when the first coding unit 500 is split into the second coding units 510 based on at least one of the block shape information and the splitting shape information of the first coding unit 500, the second coding unit 510 may also be split into the third coding units (e.g., 520a, 520b, 520c, 520d, etc.) based on at least one of the block shape information and the splitting shape information of the second coding unit 510. Therefore, a square coding unit may be determined by splitting a non-square coding unit, and the non-square coding unit may be determined by recursively splitting the square coding unit. Referring to FIG. 5, a predetermined coding unit (e.g., a coding unit of a center location or a square coding unit) among an odd number of third coding units 520b, 520c, and 520d determined by splitting the non-square second coding unit 1210 may be recursively split. According to an embodiment, the square third coding unit 520c among the odd number of third coding units 520b, 520c, and 520d may be split in a horizontal direction into a plurality of fourth coding units. A non-square fourth coding unit 540 among the plurality of fourth coding units may be split into a plurality of coding units. For example, the non-square fourth coding unit may be split into an odd number of coding units.

Coding units may be recursively split based on at least one of splitting shape information and block shape information related to each of coding units. Methods usable to recursively splitting coding units will be described below in relation to various embodiments.

According to an embodiment, the encoder 220 may determine to split each of the third coding units 520a, 520b, 520c, 520d, etc. into coding units or not to split the second coding unit 510, based on at least one of the block shape information and the splitting shape information. According to an embodiment, the encoder 220 may split the non-square second coding unit 510 into the odd number of third coding units 520b, 520c, and 520d. The image encoding apparatus 200 may put a predetermined restriction on a predetermined third coding unit among the odd number of third coding units 520b, 520c, and 520d. For example, the image encoding apparatus 200 may restrict the coding unit 520c of a center location among the odd number of third coding units 520b, 520c, and 520d to be no more split or to be split by a settable number of times. Referring to FIG. 5, the image encoding apparatus 200 may restrict the third coding unit 520c of the center location among the odd number of third coding units 520b, 520c, and 520d included in the non-square second coding unit 510, to be no more split, to be split using a predetermined splitting method (e.g., split into only four coding units or split using a splitting method of the second coding unit 510), or to be split by only a predetermined number of times (e.g., split by only n times (where n>0)). However, the restrictions on the third coding unit 520c of the center location are not limited to the above-described examples, and may include various restrictions for decoding the third coding unit 520c of the center location differently from the other third coding units 520b and 520d.

According to an embodiment, the bitstream generator 210 of the image encoding apparatus 200 may generate a bitstream related to a sample of a predetermined location in a current coding unit and a bitstream including at least one of the block shape information and the splitting shape information which are used to split the current coding unit.

FIG. 6 shows a method performed by the image encoding apparatus 200 of determining a predetermined coding unit among an odd number of coding units, according to an embodiment. The bitstream generator 210 of the image encoding apparatus 200 may determine to or not to split a current coding unit 600 into coding units of various shape and sizes. Referring to FIG. 6, the bitstream generator 210 may generate a bitstream related to a sample (e.g. a sample 640 of a center location) of a predetermined location among a plurality of samples included in the current coding unit 600 and a bitstream including at least one of block shape information and splitting shape information of the current coding unit 600. However, the predetermined location in the current coding unit 600 related to at least one of the block shape information and the splitting shape information may not be construed as limited to the center location shown in FIG. 6 and may include various locations (e.g., top, bottom, left, right, top left, bottom left, top right, bottom right, etc.) that may be included in the current coding unit 600.

According to an embodiment, when the current coding unit is split into a predetermined number of coding units, the image encoding apparatus 200 may select one of the coding units. Various methods may be used to select one of a plurality of coding units, as will be described below in relation to various embodiments.

According to an embodiment, the encoder 220 of the image encoding apparatus 200 may split the current coding unit into a plurality of coding units, and determine a coding unit of a predetermined location.

FIG. 6 shows a method performed by the image encoding apparatus 200 of determining a coding unit of a predetermined location among an odd number of coding units, according to an embodiment.

According to an embodiment, the encoder 220 may use information indicating locations of the odd number of coding units, to determine a coding unit of a center location among the odd number of coding units. Referring to FIG. 6, the encoder 220 may determine an odd number of coding units 620a, 620b, and 620c by splitting the current coding unit 600. The encoder 220 may determine the coding unit 620b of a center location by using information about locations of the odd number of coding units 620a, 620b, and 620c. For example, the encoder 220 may determine the coding unit 620b of the center location by determining the locations of the coding units 620a, 620b, and 620c based on information indicating locations of predetermined samples included in the coding units 620a, 620b, and 620c. Specifically, the encoder 220 may determine the coding unit 620b of the center location by determining the locations of the coding units 620a, 620b, and 620c based on information indicating locations of top left samples 630a, 630b, and 630c of the coding units 620a, 620b, and 620c.

According to an embodiment, the information indicating the locations of the top left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the top left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image encoding apparatus 200 may determine the coding unit 620b of the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the top left sample 630a of the upper coding unit 620a may include a coordinate (xa, ya), information indicating the location of the top left sample 630b of the middle coding unit 620b may include a coordinate (xb, yb), and information indicating the location of the top left sample 630c of the lower coding unit 620c may include a coordinate (xc, yc). The image encoding apparatus 200 may determine the middle coding unit 620b by using the coordinates of the top left samples 630a, 630b, and 630c included in the coding units 620a, 620b, and 620c, respectively. For example, when the coordinates of the top left samples 630a, 630b, and 630c are sorted in an ascending or descending order, the coding unit 620b including the coordinate (xb, yb) of the sample 630b of a center location may be determined as a coding unit of a center location among the coding units 620a, 620b, and 620c determined by splitting the current coding unit 600. However, the coordinates indicating the locations of the top left samples 630a, 630b, and 630c may include coordinates indicating absolute locations in the picture, or may use a coordinate (dxb, dyb) indicating a relative location of the top left sample 630b of the middle coding unit 620b and a coordinate (dxc, dyc) indicating a relative location of the top left sample 630c of the lower coding unit 620c with reference to the location of the top left sample 630a of the upper coding unit 620a. A method of determining a coding unit of a predetermined location by using a coordinate of a sample included in the coding unit, as information indicating a location of the sample may not be construed as limited to the above-described method, and may include various arithmetic methods capable of using the coordinate of the sample.

According to an embodiment, the image encoding apparatus 200 may split the current coding unit 600 into a plurality of coding units 620a, 620b, and 620c, and select one of the coding units 620a, 620b, and 620c based on a predetermined criterion. For example, the image encoding apparatus 200 may select the coding unit 620b, which has a size different from that of the others, among the coding units 620a, 620b, and 620c.

According to an embodiment, the image encoding apparatus 200 may determine the widths or heights of the coding units 620a, 620b, and 620c by using the coordinate (xa, ya) indicating the location of the top left sample 630a of the upper coding unit 620a, the coordinate (xb, yb) indicating the location of the top left sample 630b of the middle coding unit 620b, and the coordinate (xc, yc) indicating the location of the top left sample 630c of the lower coding unit 620c. The image encoding apparatus 200 may determine the sizes of the coding units 620a, 620b, and 620c by using the coordinates (xa, ya), (xb, yb), and (xc, yc) indicating the locations of the coding units 620a, 620b, and 620c.

According to an embodiment, the image encoding apparatus 200 may determine the width of the upper coding unit 620a to be xb-xa and determine the height thereof to be yb-ya. According to an embodiment, the image encoding apparatus 200 may determine the width of the middle coding unit 620b to be xc-xb and determine the height thereof to be yc-yb. According to an embodiment, the image encoding apparatus 200 may determine the width or height of the lower coding unit 620c by using the width or height of the current coding unit 600 or the widths or heights of the upper and middle coding units 620a and 620b. The image encoding apparatus 200 may determine a coding unit, which has a size different from that of the others, based on the determined widths and heights of the coding units 620a, 620b, and 620c. Referring to FIG. 6, the image encoding apparatus 200 may determine the middle coding unit 620b, which has a size different from the size of the upper and lower coding units 620a and 620c, as the coding unit of the predetermined location. However, the above-described method by the image encoding apparatus 200 of determining a coding unit having a size different from the size of the other coding units merely corresponds to an example of determining a coding unit of a predetermined location by using the sizes of coding units, which are determined based on coordinates of samples, and thus various methods of determining a coding unit of a predetermined location by comparing the sizes of coding units, which are determined based on coordinates of predetermined samples may be used.

However, locations of samples considered to determine locations of coding units may not be construed as limited to the above-described top left locations, and information about arbitrary locations of samples included in the coding units may be used.

According to an embodiment, the image encoding apparatus 200 may select a coding unit of a predetermined location among an odd number of coding units determined by splitting the current coding unit, considering the shape of the current coding unit. For example, when the current coding unit has a non-square shape, a width of which is longer than a height, the image encoding apparatus 200 may determine the coding unit of the predetermined location in a horizontal direction. That is, the image encoding apparatus 200 may determine one of coding units of different locations in a horizontal direction and put a restriction on the coding unit. When the current coding unit has a non-square shape, a height of which is longer than a width, the image encoding apparatus 200 may determine the coding unit of the predetermined location in a vertical direction. That is, the image encoding apparatus 200 may determine one of coding units of different locations in a vertical direction and put a restriction on the coding unit.

According to an embodiment, the image encoding apparatus 200 may use information indicating locations of an even number of coding units, to determine the coding unit of the predetermined location among the even number of coding units. The image encoding apparatus 200 may determine an even number of coding units by splitting the current coding unit, and determine the coding unit of the predetermined location by using the information about the locations of the even number of coding units. An operation related thereto may correspond to the operation of determining a coding unit of a predetermined location (e.g., a center location) among an odd number of coding units, which has been described in detail above in relation to FIG. 6, and thus a detailed description thereof will not be provided herein.

According to an embodiment, when a non-square current coding unit is split into a plurality of coding units, predetermined information about a coding unit of a predetermined location may be used in a splitting operation to determine the coding unit of the predetermined location among the plurality of coding units. For example, the encoder 220 of the image encoding apparatus 200 may use at least one of block shape information and splitting shape information, which is stored in a sample included in a coding unit of a center location, in a splitting operation to determine the coding unit of the center location among the plurality of coding units determined by splitting the current coding unit.

Referring to FIG. 6, the encoder 220 of the image encoding apparatus 200 may split the current coding unit 600 into the plurality of coding units 620a, 620b, and 620c and determine the coding unit 620b of a center location among the plurality of the coding units 620a, 620b, and 620c. The bitstream generator 210 may generate a bitstream including at least one of the block shape information and the splitting shape information that are used in a splitting process of the current coding unit 600. The encoder 220 may determine the coding unit 620b of the center location considering a location of a sample related to a bitstream of at least one of the block shape information and the splitting shape information that are used in a splitting process of the current coding unit 600. That is, the bitstream related to the sample 640 located in the center location of the current coding unit 600 and the bitstream inlcuding at least one of the block shape information and the splitting shape information of the current coding unit 600 may be generated. In this case, the encoder 220 may determine the coding unit 620b including the sample 640 as a coding unit located in the center location among the plurality of coding units 620a, 620b, and 620c. However, information used to determine the coding unit of the center location among the plurality of coding units determined by splitting the current coding unit may not be construed as limited to at least one of the block shape information and the splitting shape information that are used in a splitting process of the current coding unit, and various types of information may be used. In this regard, a process performed by the image coding apparatus 200 of determining the coding unit of the predetermined location may be opposite to a process performed by the image decoding apparatus 100 of determining the coding unit of the predetermined location among the plurality of coding units determined from the current coding unit, and thus a detailed description thereof will be omitted.

According to an embodiment, the image encoding apparatus 200 may determine one or more coding units by splitting the current coding unit, and determine an order of decoding the one or more coding units based on a predetermined block (e.g., the current coding unit).

FIG. 7 shows an order of processing a plurality of coding units when the image encoding apparatus 200 determines a plurality of coding units by splitting a current coding unit, according to an embodiment. A process performed by the image encoding apparatus 200 of processing the plurality of coding units related to FIG. 7 may be similar to an operation of the image decoding apparatus 100 described above with reference to FIG. 7, and thus a detailed description thereof will be omitted.

FIG. 8 shows a process performed by the image encoding apparatus 200 of determining that a current coding unit is split into an odd number of coding units when the coding units are not processed in a predetermined order, according to an embodiment.

According to an embodiment, the encoder 220 of the image encoding apparatus 200 may determine that the current coding unit is split into the odd number of coding units and the bitstream generator 210 may generate a bitstream including block shape information indicating a shape of the current coding unit and splitting shape information indicating that a split shape (split into odd number of coding units) of the current coding unit. Referring to FIG. 8, the square first coding unit 800 may be split into non-square second coding units 810a and 810b, and the second coding units 810a and 810b may be independently split into third coding units 820a, 820b, 820c, 820d, and 820e. According to an embodiment, the encoder 220 may determine the plurality of third coding units 820a and 820b by splitting the left second coding unit 810a among the second coding units in a horizontal direction, and split the right second coding unit 810b into an odd number of third coding units 820c, 820d, and 820e. The process performed by the image encoding apparatus 200 of determining that the current encoder is split into an odd number of coding units relating to FIG. 8 may be opposite to an operation of the image encoding apparatus 100 described with reference to FIG. 8, and thus a detailed description thereof will be omitted.

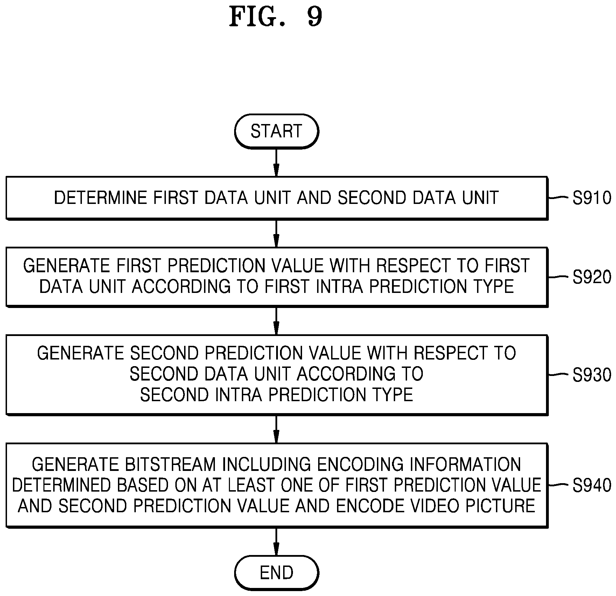

FIG. 9 shows an operation performed by the image encoding apparatus 200 of determining one or more coding units by splitting the first coding unit 900, according to an embodiment. According to an embodiment, the encoder 220 may split a first coding unit 900 and the bitstream generator 210 may generate a bitstream including at least one of block shape information indicating a shape of the first coding unit 900 and splitting shape information indicating a shape into which the first coding unit 900 is split. The square first coding unit 900 may be split into four square coding units or into a plurality of non-square coding units. For example, referring to FIG. 9, the encoder 220 may split the first coding unit 900 into a plurality of non-square coding units. In this case, the bitstream generator 210 may generate a bitstream including block shape information indicating that the first coding unit 900 is a square shape and splitting shape information indicating that the first coding unit 900 is split into non-square coding units. Specifically, the encoder 220 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction. In this case, the bitstream generator 210 may generate a bitstream including splitting shape information indicating that the odd number of coding units are determined by splitting the first coding unit 900 in a horizontal direction or in a vertical direction. A process performed by the image coding apparatus 200 of determining one or more coding units by splitting the first coding unit 900 relating to FIG. 9 may be opposite to a process of an operation of the image decoding apparatus 100 described with reference to FIG. 9 above, and thus a detailed description thereof will be omitted.

FIG. 10 shows that the image encoding apparatus 200 restricts shapes into which non-square second coding units may be split when the non-square second coding units determined by splitting the first coding unit 1000 satisfy a predetermined condition, according to an embodiment.

According to an embodiment, the encoder 220 may determine to split the square first coding unit 1000 into non-square second coding units 1010a and 1010b, or 1020a and 1020b. The second coding units 1010a and 1010b, or 1020a and 1020b may be independently split. Accordingly, the encoder 220 may determine to or not to split each of the second coding units 1010a and 1010b, or 1020a and 1020b into a plurality of coding units. An operation performed by the image encoding apparatus 200 of restricting shapes into which non-square second coding units may be split when the non-square second coding units satisfy a predetermined condition relating to FIG. 10 may be opposite to an operation of the image decoding apparatus 100 described above with reference to FIG. 10, and thus a detailed description thereof will be omitted.

FIG. 11 shows an operation by the image encoding apparatus 200 of splitting a square coding unit when splitting shape information indicates not to split the square coding unit into four square coding units, according to an embodiment. An operation of the image encoding apparatus 200 in this regard may be opposite to an operation of the image decoding apparatus 100 described above with reference to FIG. 11, and thus a detailed description thereof will be omitted.

FIG. 12 shows processing order of a plurality of coding units varying depending on a split process of the coding unit, according to an embodiment.

According to an embodiment, the encoder 220 may split a first coding unit 1200 of a square shape in at least one of a horizontal direction and a vertical direction. According to an embodiment, the bitstream generator 210 may generate a bitstream including block type information representing that the first coding unit 1200 has a square shape and split type information representing that the first coding unit 1200 is split in at least one direction of the horizontal direction and the vertical direction.

According to the embodiment, the encoder 220 may split the first coding unit 1200 to determine second coding units (for example, 1210a, 1210b, 1220a, 1220b, 1230a, 1230b, 1230c, 1230d, etc.) Referring to FIG. 12, the second coding units 1210a, 1210b, 1220a, and 1220b of non-square shape, which are determined by splitting the first coding unit 1200 only in the horizontal direction or the vertical direction, may be independently split. For example, the encoder 220 may respectively split the second coding units 1210a and 1210b, which generated by splitting the first coding unit 1200 in the vertical direction, in the horizontal direction to determine third coding units 1216a, 1216b, 1216c, and 1216d, and may respectively split the second coding units 1220a and 1220b, which are generated by splitting the first coding unit 1200 in the horizontal direction, in the horizontal direction to determine third coding units 1226a, 1226b, 1226c, and 1226d. The operations of the image encoding apparatus 200 regarding FIG. 10 may be opposite the operations of the image decoding apparatus 100 described above with reference to FIG. 10, and thus, detailed descriptions thereof are omitted.

FIG. 13 illustrates, when a coding unit is recursively split to determine a plurality of coding units, processes of determining a depth of a coding unit according to variation in a shape and a size of the coding unit. The process for the encoder 220 of the image encoding apparatus 200 to determine a depth may be opposite the process for the decoder 130 of the image decoding apparatus 100 to determine a depth of the coding unit described above with reference to FIG. 13, and thus, detailed descriptions thereof are omitted.

According to an embodiment, the image encoding apparatus 200 may determine whether a plurality of coding units split from the current coding unit are split in a certain split type, based on values of indexes for classifying the plurality of coding units. Referring to FIG. 14, the image encoding apparatus 200 may split a first coding unit 1410 of a rectangular shape, a height of which is greater than a width, to determine even-numbered coding units 1412a and 1412b or odd-numbered coding units 1414a, 1414b, and 1414c. The image encoding apparatus 200 may use an index (PID) indicating each coding unit, to distinguish each of the plurality of coding units from the others. According to an embodiment, the PID may be obtained from a sample at a predetermined location (e.g., an upper left sample) in each of the coding units. The operations of the image encoding apparatus 200 regarding FIG. 14 may be opposite the operations of the image decoding apparatus 100 described above with reference to FIG. 14, and thus, detailed descriptions thereof are omitted.

FIG. 15 shows that a plurality of coding units are determined according to a plurality of predetermined data units included in a picture, according to an embodiment. According to an embodiment, the encoder 220 may use the reference coding unit as a predetermined data unit, from which a recursive split of the coding unit starts. Regarding FIG. 15, the operations of the image encoding apparatus 200 using the reference coding unit may be opposite the operations of the image decoding apparatus 100 using the reference coding unit described above with reference to FIG. 15, and thus, detailed descriptions thereof are omitted.

According to an embodiment, the bitstream generator 210 of the image encoding apparatus 200 may generate a bitstream including at least one of information about a shape of the reference coding unit and information about a size of the reference coding unit, with respect to each of the various data units. The process of determining at least one coding unit included in a reference coding unit 1500 of a square shape is described above via the description of the process of splitting the current coding unit 300 with reference to FIG. 3, and the process of determining at least one coding unit included in the reference coding unit 1500 of a non-square shape is described above via the description of the process of splitting the current coding unit 400 or 450 with reference to FIG. 4. Thus, detailed descriptions thereof are omitted.

According to an embodiment, the encoder 220 may use an index for identifying a size and a shape of the reference coding unit to determine the size and the shape of the reference coding unit according to some of data units determined in advance based on a predetermined condition. That is, the bitstream generator 210 may generate a bitstream including the index for identifying the size and the shape of the reference coding unit, for each of data units satisfying a predetermined condition (for example, a data unit having a size equal to or less than the slice) from among the various data units (for example, a sequence, a picture, a slice, a slice segment, a largest coding unit, etc.) The encoder 220 may determine the size and the shape of the reference data unit for each data unit that satisfies the predetermined condition, by using the index. According to an embodiment, at least one of the size and the shape of the reference coding unit related to the index indicating the size and the shape of the reference coding unit may be determined in advance. That is, the encoder 220 may select predetermined at least one of the size and the shape of the reference coding unit, and then, may determine at least one of the size and the shape of the reference coding unit included in the data unit that is a reference of obtaining the index. The operation of the encoder 220 using the index for identifying the size and the shape of the reference coding unit may be similar to the operation of the decoder 130 described above, and thus, detailed descriptions thereof are omitted.

FIG. 16 is a diagram of a processing block that is a reference of determining a determination order of the reference coding unit included in a picture 1600, according to an embodiment.

According to an embodiment, the encoder 220 may determine a size of at least one processing block included in an image, by obtaining information about the size of the processing block. The encoder 220 may determine the size of at least one processing block included in the image, and the bitstream generator 210 may generate a bitstream including information about the size of the processing block. The size of the processing block may be a predetermined size of a data unit indicated by the information about the size of the processing block.

According to an embodiment, the bitstream generator 210 of the image encoding apparatus 200 may generate a bitstream including information about the size of the processing block, with respect to each of certain data units. For example, the bitstream including the information about the size of the processing block may be generated with respect to each of data units such as an image, a sequence, a picture, a slice, a slice segment, etc. That is, the bitstream generator 210 may generate a bitstream including information about the size of the processing block for each of the various data units, the encoder 220 may determine the size of the processing block split from the picture by using the information about the size of the processing block, and the size of the processing block may be integer-times greater than the reference coding unit.

According to an embodiment, the encoder 220 may determine sizes of processing blocks 1602 and 1612 included in a picture 1600. For example, the encoder 220 may determine the size of the processing block based on the information about the size of the processing block. Referring to FIG. 16, the encoder 220 may determine a width of the processing blocks 1602 and 1612 to be 4 times greater than a width of the reference coding unit, and a height of the processing blocks 1602 and 1612 to be 4 times greater than a eight of the reference coding unit. The encoder 220 may determine an order of determining at least one reference coding unit in at least one processing block. Operations of the encoder 220 related to the processing block may be similar to those of the decoder 130 described above with reference to FIG. 16, and thus, descriptions thereof are omitted.

According to an embodiment, the bitstream generator 210 of the image encoding apparatus 200 may generate a bitstream including block type information indicating the shape of the current coding unit or split type information representing a method of splitting the current coding unit. The block type information or the split type information may be included in a bitstream related to various data units. For example, the bitstream generator 210 of the image encoding apparatus 200 may use block type information or split type information included in a sequence parameter set, a picture parameter set, a video parameter set, a slice header, or a slice segment header. Moreover, the bitstream generator 210 of the image encoding apparatus 200 may generate a bitstream including a syntax representing the block type information or the split type information for each of the largest coding unit, the reference coding unit, and the processing block.

According to an embodiment, the encoder 220 may determine a kind of split type of a coding unit, to be different according to a predetermined data unit. The encoder 220 of the image encoding apparatus 200 may determine a combination of split types of the coding unit to be different according to a predetermined data unit (e.g., a sequence, a picture, a slice, etc.) according to an embodiment.

FIG. 17 is a diagram showing coding units that may be determined for each picture, in a case where pictures have different combinations of split types of a coding unit from one another.

Referring to FIG. 17, the encoder 220 may determine the combination of the split types of the coding unit to be different according to each picture. For example, the encoder 220 may encode an image by using a picture 1700 that may be split as four coding units, a picture 1710 that may be split as two or four coding units, and a picture 1720 that may be split as two, three, or four coding units, from among one or more pictures included in the image. The encoder 220 may split the picture 1700 as four square coding units. The encoder 220 may split the picture 1710 as two or four coding units. The encoder 220 may split the picture 1720 as two, three, or four coding units. The above-described combination of the split types is an example for describing operations of the image encoding apparatus 200, and thus, the combination of the split types is not limited to the above embodiment, and it is interpreted that various combinations of split types may be used with respect to a predetermined data unit.

According to an embodiment, the encoder 220 of the image encoding apparatus 200 may determine a combination of the split type, by which the coding unit may be split, for each predetermined data unit by using an index indicating the combination of the split type information, and accordingly, each predetermined data unit may use different combination of the split type from the others. Furthermore, the bitstream generator 210 of the image encoding apparatus 200 may generate a bitstream including an index indicating the combination of the split type information for each predetermined data unit (e.g., a sequence, a picture, a slice, etc.) For example, the bitstream generator 210 may generate a sequence parameter set, a picture parameter set, or a slice header including the index indicating the combination of the split type information.

FIGS. 18 and 19 show various types of coding unit that may be determined based on split type information expressed in a binary code, according to an embodiment.

According to an embodiment, the encoder 220 of the image encoding apparatus 200 may split the coding unit in various types, and may generate a bitstream including the block type information and the split type information via the bitstream generator 210. The split types of the coding unit may include various types including the above-described types in the above embodiment. Referring to FIG. 18, the encoder 220 may split the coding unit of a square type in one of a horizontal direction and a vertical direction based on the split type information, and may split a coding unit of non-square shape in a horizontal or vertical direction. Characteristics of the binary code of the split type information that may be used by the image encoding apparatus 200 may correspond to those of the image decoding apparatus 100 described above with reference to FIGS. 18 and 19, and thus, detailed descriptions thereof are omitted.

According to an embodiment, the image encoding apparatus 200 may generate prediction data by performing an inter prediction or intra prediction on a coding unit, may generate residual data by performing an inverse-transformation on a transformation unit included in a current coding unit, and may encode the current coding unit by using the prediction data and the residual data.

According to an embodiment, a prediction mode of the coding unit may be at least one of an intra mode, an inter mode, and a skip mode. According to an embodiment, prediction may be independently performed on each coding unit, so that a prediction mode having a minimum error may be selected.

For example, when a coding unit of 2Nx2N is split and becomes two 2NxN or two Nx2N coding units, a prediction in the inter mode and a prediction in the intra mode may be separately performed on the coding units. Also, according to an embodiment, the encoder 220 of the image encoding apparatus 200 may encode the coding unit by using a CU skip mode in a case where the coding unit has a non-square shape, as well as a square shape. Since the image may be decoded in the CU skip mode even in a case of the coding unit of non-square shape, as well as the coding unit of the square shape determined at least one of the block type information and the split type information, the skip mode that is relatively more adaptive may be used and encoding/decoding efficiency of the image may be improved. The characteristic of the image encoding apparatus 200 using the skip mode in the coding unit of the non-square shape may be similar to that of the image encoding apparatus 200 using the skip mode described above, and thus, detailed descriptions thereof are omitted.

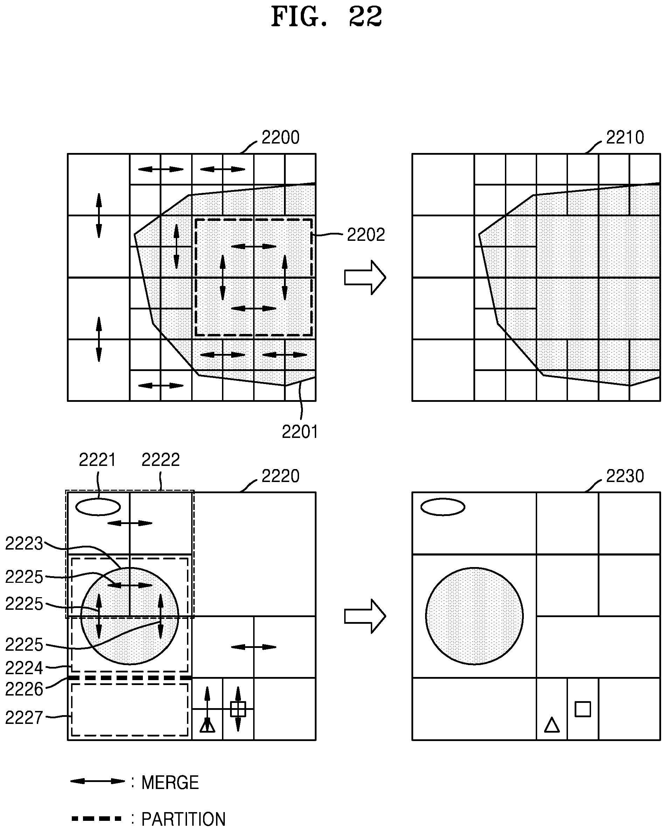

FIG. 22 is a diagram illustrating a process of performing merging or splitting between coding units determined according to a predetermined encoding method, according to an embodiment.

According to an embodiment, the image encoding apparatus 200 may determine coding units for splitting the picture by using the above-described predetermined encoding method. For example, the image encoding apparatus 200 may determine a coding unit of a current depth or may split the coding unit into four coding units of a lower depth, based on split information of the coding unit. As described above, the image encoding apparatus 200 may determine the coding unit by using the block type information representing that the current coding unit always has the square shape, and the split type information representing that the current coding unit may not be split or may be split as four square coding units. Referring to FIG. 22, pictures 2200 and 2220 may be split according to the square coding unit determined by the above-described encoding method.

However, according to the above-described predetermined decoding unit, whether the current coding unit may be split is determined according to whether it is suitable for expressing a relatively small object included in the current coding unit, and thus, it may be impossible to encode a larger object and a smaller object in the picture via one coding unit. Here, an object may be a set of samples included in the picture, and may denote a region of samples having similar sample values to one another, which may be distinguished from the other regions. Referring to FIG. 22, the image encoding apparatus 200 may split a first coding unit 2222 as four coding units of a lower depth to reconstruct a smaller object 2221, and may determine a coding unit for decoding the smaller object 2221. However, since a larger object 2223 is not included in the current coding unit 2222, the larger object 2223 is not suitable to be decoded by using the current coding unit 2222. Further, since the current coding unit 2222 is split to decode the smaller object 2221, a splitting process of the coding unit that is unnecessary for decoding the larger object 2223 has to be performed and the process is not efficient. That is, when the image encoding apparatus 200 may use one coding unit to encode a part of the larger object 2223, an image encoding may be effectively performed.

According to an embodiment, the encoder 220 of the image encoding apparatus 200 may split the current coding unit by using at least one of the block type information and the split type information, and the block type information may be determined in advance to use only the square type and the split type information may be determined in advance not to split or to represent that the coding unit may be split into four square coding units. This may correspond to the process of determining the coding unit used in the predetermined encoding method described above with reference to one or more embodiments. In this case, the encoder 220 may use the sample values included in the picture, to merge the coding units with one another or to split the coding unit determined by using the predetermined encoding method. For example, the encoder 220 may detect various objects included in the picture by checking parts having similar sample values to each other, and may perform the merging/splitting process of the coding units based on the parts including the detected objects.

Referring to FIG. 22, the encoder 220 may determine a plurality of coding units for splitting the picture 2200, by using the above-described encoding method. However, even there is a part 2201 having similar sample value in the picture, a process of splitting the similar region as a plurality of coding units, not one coding unit, may be performed. In this case, even when the coding unit is determined by the predetermined encoding method, the encoder 220 may merge the coding units into one coding unit 2202 for perform the encoding as one coding unit. Referring to FIG. 22, as another embodiment, the encoder 220 may split the coding unit 2222 for encoding the smaller object 2221 into four coding units, by using the above-described predetermined encoding method. Since the coding units split as above may not include the detected larger object 2223, the encoder 220 may merge the coding units as one coding unit including the parts having similar sample values to each other (2225).

According to an embodiment, the encoder 220 may determine the coding unit by using the predetermined encoding method that may not split the coding unit or may split the coding unit into four coding units by using split information of the coding unit, and then, may re-split the coding unit taking into account the sample values of the samples included in the picture. That is, the coding unit may split the coding unit that has been already determined, as well as merge of the coding units, for determining the coding unit for each object. Referring to FIG. 22, the encoder may merge the coding units for the object 2223, or may re-split the coding unit that is merged for the object 2223 (2226) to determine the coding unit optimized for the object 2223. That is, the encoder 220 may determine a part that does not include the object 2223 as a separate coding unit from the object 2223, through the splitting process (2226).

Processes of recursively splitting the coding unit to determine a plurality of coding units according to the block type information and the block split information according to an embodiment are as above descriptions with reference to FIG. 13. In the loop filtering execution information of the filtering units according to an embodiment, when a flag value is 1, it represents that the loop filtering is performed on the corresponding filtering unit, and when the flag value is 0, it represents that the loop filtering is not performed. Referring to Table 1 above, information of the data unit for determining the filtering unit that is the filtering target of the loop filtering units 2040 and 2070 may be all encoded as filtering information and transferred.

The coding units configured according to an embodiment are to minimize an error with the original image, and thus, are expected to have high spatial relation therebetween. Therefore, since the filtering units are determined based on the coding unit according to an embodiment, an operation of determining the filtering unit separately from the determination of the coding unit may be omitted. Accordingly, since the filtering unit is determined based on the coding unit according to an embodiment, information for determining a split type of the filtering unit may be omitted, and thus, a transmission bitrate of the filtering information may be reduced.

In the above embodiment, it is described that the filtering unit is determined based on the coding unit according to an embodiment, splitting of the filtering unit is performed based on the coding unit, and then, the filtering unit is no longer split at an arbitrary depth and the type of the filtering unit at the corresponding depth may be determined.

The determination of the filtering unit described above with reference to the above embodiment may be applied to various embodiments such as deblocking filtering, adaptive loop filtering, etc., as well as the loop filtering.

The image decoding apparatus 100 according to an embodiment may split the current coding unit by using at least one of the block type information and the split type information, and the block type information may be determined in advance to use only the square type and the split type information may be determined in advance not to split or to represent that the coding unit may be split into four square coding units. That is, according to the block type information, the current coding unit has the square shape, and may not be split or may be split into four square coding units according to the split type information. The image decoding apparatus 100 may obtain a bitstream, the bitstream being generated by a predetermined encoding method determined in advance to only use the above block type and the split type, through the bitstream obtainer, and the decoder 130 may only use the block type and the split type determined in advance. In this case, the image decoding apparatus 100 may address a compatibility issue with a predetermined encoding method, by using a predetermined decoding method similar to the above-described encoding method. According to an embodiment, when the image decoding apparatus 100 uses the above-described predetermined decoding method that only uses predetermined block type and split type from among various types represented by the block type information and the split type information, the block type information only represents the square shape, and thus, the image decoding apparatus 100 may omit a process of obtaining the block type information from the bitstream. A syntax representing whether to use the above-described predetermined decoding method may be used, and the syntax may be obtained from a bitstream for each of data units of various shapes including a plurality of coding units, e.g., a sequence, a picture, a slice unit, a largest coding unit, etc. That is, the bitstream obtainer 120 may determine whether to obtain the syntax representing the block type information from the bitstream, based on a syntax representing whether to use the predetermined decoding method.

FIG. 23 is a diagram showing an index according to a Z-scanning order of coding units according to an embodiment.

The image decoding apparatus 100 according to an embodiment may scan lower data units included in an upper data unit in a Z-scanning order. Also, the image decoding apparatus 100 according to an embodiment may sequentially access data according to Z-scan indexes in the coding unit included in the largest coding unit or a processing block.

The image decoding apparatus 100 according to an embodiment may split a reference coding unit into at least one coding unit, as described above with reference to FIGS. 3 and 4. Here, in the reference coding unit, coding units of the square shape and coding units of the non-square shape may mixedly exist. The image decoding apparatus 100 according to an embodiment may access data according to the Z-scan index included in each coding unit in the reference coding unit. Here, a way of applying the Z-scan index may vary depending on whether there is a non-square shape coding unit in the reference coding unit.

According to an embodiment, when the coding unit of the non-square shape does not exist in the reference coding unit, coding units of a lower depth in the reference coding unit may have successive Z-scan indexes. For example, a coding unit of an upper depth may include four coding units of a lower depth, according to an embodiment. Here, four coding units of the lower depth may have successive boundaries among them, and the coding units of the lower depth may be scanned in the Z-scanning order according to the indexes representing the Z-scanning order. The indexes representing the Z-scanning order according to an embodiment may be set as increasing numbers according to the Z-scanning order with respect to the coding units. In this case, deeper coding units of an identical depth may be scanned according to the Z-scanning order.

According to an embodiment, when there is at least one coding unit of the non-square shape in the reference coding unit, the image decoding apparatus 100 splits each of the coding units in the reference coding unit into sub-blocks and performs scanning operation on the split sub-blocks in the Z-scanning order. For example, when there is the coding unit of the non-square shape in the vertical or horizontal direction in the reference coding unit, the Z-scanning may be performed by using split sub-blocks. In addition, for example, the reference coding unit is split into odd-numbered coding units, the Z-scanning may be performed by using the sub-blocks. The sub-block is obtained by splitting the coding unit that is no longer split or an arbitrary coding unit, and may have a square shape. For example, the coding unit of the square shape may be split into four square sub-blocks. Also, for example, the coding unit of the non-square shape may be split into two square sub-blocks.

Referring to FIG. 23, for example, the image decoding apparatus 100 according to an embodiment may scan coding units 2302, 2304, 2306, 2308, and 2310 of lower depth in the Z-scanning order in a coding unit 2300. The coding unit 2300 and the coding units 2302, 2304, 2306, 2308, and 2310 are respectively an upper coding unit and lower coding units, relative to each other. The coding unit 2300 includes the coding units 2306 and 2310 of the non-square shape in the horizontal direction. The coding units 2306 and 2310 of the non-square shape have discontinuous boundaries with adjacent coding units 2302 and 2304 of the square shape. Also, the coding unit 2308 has a square shape, and is intervened between odd-numbered coding units split from the coding unit of the non-square shape. Like the coding units 2306 and 2310 of the non-square shape, the coding unit 2308 has discontinuous boundaries with adjacent coding units 2302 and 2304 of the square shape. When the non-square coding units 2306 and 2310 are included in the coding unit 2300 or the coding unit 2308 intervened among the odd-numbered coding units split from the non-square coding unit is included in the coding unit 2300, adjacent boundaries between the coding units are discontinuous, and thus, successive Z-scan indexes may not be set. Therefore, the image decoding apparatus 100 may split the coding units as sub-blocks and set the Z-scan indexes successively. Also, the image decoding apparatus 100 may perform successive Z-scanning operations on the coding units 2306 and 2310 of the non-square shape or the coding unit 2308 intervened among the odd-numbered coding units of the non-square shape.

A coding unit 2320 shown in FIG. 23 is obtained by splitting the coding units 2302, 2304, 2306, 2308, and 2310 in the coding unit 2300 into sub-blocks. A Z-scan index may be set with respect to each of the sub-blocks, and adjacent boundaries between the sub-blocks are continuous. Thus, the sub-blocks may be scanned in the Z-scanning order. For example, the coding apparatus according to an embodiment may split the coding unit 2308 as sub-blocks 2322, 2324, 2326, and 2328. Here, the sub-blocks 2322 and 2324 may be scanned after processing data on a sub-block 2330, and the sub-blocks 2326 and 2328 may be scanned after processing data on a sub-block 2332. Also, the sub-blocks may be scanned in the Z-scanning order.

In the above embodiment, the data units may be scanned according to the Z-scanning order for storing data, loading data, accessing data, etc.

Also, in the above embodiment, it is described that the data units may be scanned according to the Z-scanning order, but the data units may be scanned in various scanning orders, e.g., a raster scanning, an N scanning, an upper and right diagonal scanning, a horizontal scanning, a vertical scanning, etc., and may not be limited to the Z-scanning order.

Also, in the above embodiment, it is described that the coding units in the reference coding unit are scanned, but is not limited thereto, but it is not limited to the above example, that is, a target to be scanned may be the largest coding unit or an arbitrary block in a processing block.

Also, in the above embodiment, only when there is at least one of non-square block, the coding units is split into sub-blocks to be scanned according to the Z-scanning order. However, even when there is no non-square block for simplified implementation, the coding units may be split into sub-blocks to be scanned according to the Z-scanning order.

The image decoding apparatus 100 according to an embodiment may generate prediction data by performing an inter prediction or intra prediction on a coding unit, may generate residual data by performing an inverse-transformation on a transformation unit included in a current coding unit, and may reconstruct the current coding unit by using the prediction data and the residual data.

A prediction mode of the coding unit according to an embodiment may be at least one of an intra mode, an inter mode, and a skip mode. According to an embodiment, the prediction mode may be independently selected with respect to each coding unit.

For example, when a coding unit of 2Nx2N is split and becomes two 2NxN or two Nx2N coding units, a prediction in the inter mode and a prediction in the intra mode may be separately performed on the coding units. In addition, the skip mode may be applied to the coding unit of 2NxN or Nx2N according to an embodiment.

Meanwhile, according to an embodiment, in the image decoding apparatus 100, a bi-prediction may be allowed on a coding unit of 8x4 or 4x8 in the skip mode. In the skip mode, skip mode information about the coding unit is only transferred, and thus, usage of residual data on the corresponding coding unit may be omitted. Therefore, overhead of the inverse-quantization and inverse-transformation may be reduced. Instead, the image decoding apparatus 100 according to an embodiment allows the bi-prediction on a coding unit to which the skip mode is applied, to improve a decoding efficiency. Also, the image decoding apparatus 100 according to an embodiment allows the bi-prediction on the coding unit of 8x4 or 4x8, but sets relatively smaller number of interpolation taps in a motion compensation process to efficiently use a memory bandwidth. As an example, instead of using an interpolation filter of 8-tap, an interpolation filter having taps less than 8 (e.g., 2-tap interpolation filter) may be used.

Also, the image decoding apparatus 100 according to an embodiment may split a region included in a current coding unit in a predetermined type (e.g., an oblique-based split), and may perform signaling of intra prediction or intra prediction information about each split region.

The image decoding apparatus 100 according to an embodiment may obtain a prediction sample of a current coding unit by using peripheral samples of the current coding unit in the intra mode. Here, in the intra prediction, the prediction is performed by using peripheral samples that have been reconstructed, and the samples are referred to as reference samples.

FIG. 24 is a diagram of a reference sample for intra prediction of a coding unit, according to an embodiment. Referring to FIG. 24, with respect to the current coding unit 2300 having a non-square block shape, a length w in a horizontal direction, and a length h in a vertical direction, w+h reference samples above the coding unit 2300, w+h reference samples at a left side of the coding unit 2300, and one reference sample at upper left side of the coding unit 2300, that is, total 2(w+h)+1 reference samples are necessary. To prepare the reference samples, a process of performing a padding on a portion where the reference sample does not exist is performed, and a reference sample filtering process for each prediction mode may be performed to reduce quantization error in a reconstructed reference sample.

In the above embodiment, the number of reference samples in a case where the block type of the current coding unit is non-square shape, but the number of the reference samples may be equally applied to a case where the block type of the current coding unit is a square shape.

The above-described embodiments illustrate operations related to the image decoding method performed by the image decoding apparatus 100. Hereinafter, operations of the image encoding apparatus 200 performing an image encoding method corresponding to inverse-processes of the image decoding method will be described below with reference to various embodiments.

FIG. 2 shows a block diagram of the image encoding apparatus 200 capable of decoding an image based on at least one of block shape information and splitting shape information, according to an embodiment.

Referring to FIG. 2, according to an embodiment, the image encoding apparatus 200 may include a data unit determiner 210 that determines data units for intra prediction from a video picture, a bitstream obtainer 230 that generates a first prediction value with respect to a first data unit according to a first intra prediction type using predetermined prediction information and generates a second prediction value with respect to a second data unit according to a second intra prediction type using adjacent data units of the data units, generates a bitstream including coding information determined based on at least one of the first prediction value and the second prediction value, and encodes the video picture, and the encoder 220. In this regard, the intra prediction type information is information indicating whether a data unit is predicted according to at least one of the first intra prediction type or the second intra prediction type, wherein the first intra prediction type may predict the data unit using information other than sample values of neighboring data units, and the second intra prediction type may predict the data unit using the sample values of the neighboring data units.

According to an embodiment, the data unit determiner 210 of the image encoding apparatus 200 may determine which type of the first intra prediction type and the second intra prediction type is used to predict the data unit. For example, the data units may be one of coding units, prediction units, and transform units.

According to an embodiment, the encoder 220 of the image encoding apparatus 200 may generate the first prediction value with respect to the first data unit according to the first intra prediction type and the second prediction value with respect to the second data unit according to the second intra prediction type. Also, the encoder 220 may generate encoding information using the first prediction value and the second prediction value. For example, prediction according to the first intra prediction type may perform intra prediction using information other than neighboring data units. For example, prediction according to the second intra prediction type may perform intra prediction using the neighboring data units.

According to an embodiment, the bitstream generator 230 of the image encoding apparatus 200 may generate a bitstream including the encoding information determined based on at least one of the first prediction value and the second prediction value. Also, the bitstream generator 230 may include the intra prediction type information indicating whether to predict first data units according to the first intra prediction type or the second intra prediction type in the bitstream.

FIG. 3 illustrates a process of determining a first data unit predicted according to a first intra prediction type and a second data unit predicted according to a second intra prediction type, according to an embodiment.

According to an embodiment, the data unit determiner 210 may determine the first data units 310 predicted according to the first intra prediction type and the second data units 320 predicted according to the second intra prediction type. For example, it may be determined whether a predicted data unit is predicted using neighboring data units or information other than information about the neighboring data units.

According to an embodiment, the encoder 220 may generate a prediction value of a data unit using the information other than information about the neighboring data units. For example, the encoder 220 may generate the prediction value of the data unit using a previously stored value. For example, the previously stored value may be determined an RDO result.

An operation of the image encoding apparatus 200 described with reference to FIG. 3 may be opposite to an operation of the image decoding apparatus 100 described above, and thus a detailed description thereof will be omitted.

FIG. 4 illustrates a process of predicting a first data unit according to a first intra prediction type based on predetermined prediction information, according to an embodiment.

According to an embodiment, the encoder 220 may predict the first data units 420 predicted according to the first intra prediction type using information other than information about neighboring data units. For example, the first data units 420 may be predicted using the sample values 410 adjacent to a data unit of an upper layer that includes the first data unit 420. The sample value 410 adjacent to the data unit of the upper layer including the first data unit 420 may include information about neighboring pixels of a CTU boundary or information about neighboring pixels of a CU boundary. When prediction is performed using the information about the neighboring pixels of the CTU boundary, a prediction target unit may be CU, PU, TU, or CTU. When prediction is performed using the information about the neighboring pixels of the CU boundary, the prediction target unit may be PU, TU, or CU.

FIG. 5 illustrates a process of predicting a second data unit according to a second intra prediction type predicted using adjacent data units, according to an embodiment.

According to an embodiment, the encoder 220 may perform prediction according to the second intra prediction type using data units adjacent to a data unit. For example, when prediction is performed on the data unit 510, the information 511 about the data unit 530 encoded according to a first intra prediction type adjacent to a bottom side of the data unit 510 may be used. For example, when prediction is performed on the data unit 520, the information 521 about the data unit 530 encoded according to the first intra prediction type adjacent to a right side of the data unit 520 may be used.

According to an embodiment, the encoder 220 may perform prediction using sample values of left and top sides when a distance of the left or top side is close according to a sample position predicted in the data unit 510. Alternatively, according to an embodiment, the encoder 220 may perform prediction using sample values of right and bottom sides when a distance of the right or bottom side is close according to the sample position predicted in the data unit 510.

An operation of the image encoding apparatus 200 described with reference to FIG. 6 may be opposite to an operation of the image decoding apparatus 100 described above, and thus a detailed description thereof will be omitted.

FIG. 7 illustrates a process of determining a first intra prediction type and a second intra prediction type with respect to a data unit, according to an embodiment.

According to an embodiment, the bitstream generator 230 may include intra prediction type information indicating whether to generate a prediction value according to the first intra prediction type or whether to generate a prediction value according to the second intra prediction type with respect to each of CU, PU or TU in a bitstream.

According to an embodiment, the bitstream generator 230 may include intra prediction type information indicating to perform prediction according to the first intra prediction type in an Intra_DC mode and perform prediction according to the second intra prediction type in modes other than the Intra_DC mode in the bitstream.

According to an embodiment, the bitstream generator 230 may include intra prediction type information indicating which one of a first data unit and a second data unit is used to classify a data unit in the bitstream.

FIG. 9 shows a flowchart of a video encoding method using intra prediction type information, according to an embodiment.

In operation S910, the data unit determiner 210 of the image encoding apparatus 200 may determine a first data unit predicted according to a first intra prediction type or a second data unit predicted according to a second intra prediction type. For example, the first intra prediction type may perform prediction on a data unit using information other than sample values of adjacent units of the data unit. For example, the second intra prediction type may perform prediction on the data unit using the sample values of the adjacent units of the data unit.

In operation S920, the encoder 220 of the image encoding apparatus 200 may generate a first prediction value with respect to a first data unit according to the first intra prediction type.

In operation S930, the encoder 220 of the image encoding apparatus 200 may generate a second prediction value with respect to a second data unit according to the second intra prediction type.

In operation S940, the bitstream generator 230 of the image encoding apparatus 200 may generate a bitstream including encoding information determined based on at least one of the first prediction value and the second prediction value. The encoder 220 may encode a video picture in which the bitstream is generated.

FIG. 10 shows that the image encoding apparatus 200 restricts shapes into which non-square second coding units may be split when the non-square second coding units determined by splitting the first coding unit 1000 satisfy a predetermined condition, according to an embodiment.

According to an embodiment, the encoder 220 may determine to split the square first coding unit 1000 into non-square second coding units 1010a and 1010b, or 1020a and 1020b. The second coding units 1010a and 1010b, or 1020a and 1020b may be independently split. Accordingly, the encoder 220 may determine to or not to split each of the second coding units 1010a and 1010b, or 1020a and 1020b into a plurality of coding units. An operation performed by the image encoding apparatus 200 of restricting shapes into which non-square second coding units may be split when the non-square second coding units satisfy a predetermined condition relating to FIG. 10 may be opposite to an operation of the image decoding apparatus 100 described above with reference to FIG. 10, and thus a detailed description thereof will be omitted.

FIG. 11 shows an operation by the image encoding apparatus 200 of splitting a square coding unit when splitting shape information indicates not to split the square coding unit into four square coding units, according to an embodiment. An operation of the image encoding apparatus 200 in this regard may be opposite to an operation of the image decoding apparatus 100 described above with reference to FIG. 11, and thus a detailed description thereof will be omitted.

FIG. 12 shows processing order of a plurality of coding units varying depending on a split process of the coding unit, according to an embodiment.

According to an embodiment, the encoder 220 may split a first coding unit 1200 of a square shape in at least one of a horizontal direction and a vertical direction. According to an embodiment, the bitstream generator 210 may generate a bitstream including block type information representing that the first coding unit 1200 has a square shape and split type information representing that the first coding unit 1200 is split in at least one direction of the horizontal direction and the vertical direction.

According to the embodiment, the encoder 220 may split the first coding unit 1200 to determine second coding units (for example, 1210a, 1210b, 1220a, 1220b, 1230a, 1230b, 1230c, 1230d, etc.) Referring to FIG. 12, the second coding units 1210a, 1210b, 1220a, and 1220b of non-square shape, which are determined by splitting the first coding unit 1200 only in the horizontal direction or the vertical direction, may be independently split. For example, the encoder 220 may respectively split the second coding units 1210a and 1210b, which generated by splitting the first coding unit 1200 in the vertical direction, in the horizontal direction to determine third coding units 1216a, 1216b, 1216c, and 1216d, and may respectively split the second coding units 1220a and 1220b, which are generated by splitting the first coding unit 1200 in the horizontal direction, in the horizontal direction to determine third coding units 1226a, 1226b, 1226c, and 1226d. The operations of the image encoding apparatus 200 regarding FIG. 10 may be opposite the operations of the image decoding apparatus 100 described above with reference to FIG. 10, and thus, detailed descriptions thereof are omitted.

FIG. 13 illustrates, when a coding unit is recursively split to determine a plurality of coding units, processes of determining a depth of a coding unit according to variation in a shape and a size of the coding unit. The process for the encoder 220 of the image encoding apparatus 200 to determine a depth may be opposite the process for the decoder 130 of the image decoding apparatus 100 to determine a depth of the coding unit described above with reference to FIG. 13, and thus, detailed descriptions thereof are omitted.

According to an embodiment, the image encoding apparatus 200 may determine whether a plurality of coding units split from the current coding unit are split in a certain split type, based on values of indexes for classifying the plurality of coding units. Referring to FIG. 14, the image encoding apparatus 200 may split a first coding unit 1410 of a rectangular shape, a height of which is greater than a width, to determine even-numbered coding units 1412a and 1412b or odd-numbered coding units 1414a, 1414b, and 1414c. The image encoding apparatus 200 may use an index (PID) indicating each coding unit, to distinguish each of the plurality of coding units from the others. According to an embodiment, the PID may be obtained from a sample at a predetermined location (e.g., an upper left sample) in each of the coding units. The operations of the image encoding apparatus 200 regarding FIG. 14 may be opposite the operations of the image decoding apparatus 100 described above with reference to FIG. 14, and thus, detailed descriptions thereof are omitted.

FIG. 15 shows that a plurality of coding units are determined according to a plurality of predetermined data units included in a picture, according to an embodiment. According to an embodiment, the encoder 220 may use the reference coding unit as a predetermined data unit, from which a recursive split of the coding unit starts. Regarding FIG. 15, the operations of the image encoding apparatus 200 using the reference coding unit may be opposite the operations of the image decoding apparatus 100 using the reference coding unit described above with reference to FIG. 15, and thus, detailed descriptions thereof are omitted.

According to an embodiment, the bitstream generator 210 of the image encoding apparatus 200 may generate a bitstream including at least one of information about a shape of the reference coding unit and information about a size of the reference coding unit, with respect to each of the various data units. The process of determining at least one coding unit included in a reference coding unit 1500 of a square shape is described above via the description of the process of splitting the current coding unit 300 with reference to FIG. 3, and the process of determining at least one coding unit included in the reference coding unit 1500 of a non-square shape is described above via the description of the process of splitting the current coding unit 400 or 450 with reference to FIG. 4. Thus, detailed descriptions thereof are omitted.

According to an embodiment, the encoder 220 may use an index for identifying a size and a shape of the reference coding unit to determine the size and the shape of the reference coding unit according to some of data units determined in advance based on a predetermined condition. That is, the bitstream generator 210 may generate a bitstream including the index for identifying the size and the shape of the reference coding unit, for each of data units satisfying a predetermined condition (for example, a data unit having a size equal to or less than the slice) from among the various data units (for example, a sequence, a picture, a slice, a slice segment, a largest coding unit, etc.) The encoder 220 may determine the size and the shape of the reference data unit for each data unit that satisfies the predetermined condition, by using the index. According to an embodiment, at least one of the size and the shape of the reference coding unit related to the index indicating the size and the shape of the reference coding unit may be determined in advance. That is, the encoder 220 may select predetermined at least one of the size and the shape of the reference coding unit, and then, may determine at least one of the size and the shape of the reference coding unit included in the data unit that is a reference of obtaining the index. The operation of the encoder 220 using the index for identifying the size and the shape of the reference coding unit may be similar to the operation of the decoder 130 described above, and thus, detailed descriptions thereof are omitted.

FIG. 16 is a diagram of a processing block that is a reference of determining a determination order of the reference coding unit included in a picture 1600, according to an embodiment.

According to an embodiment, the encoder 220 may determine a size of at least one processing block included in an image, by obtaining information about the size of the processing block. The encoder 220 may determine the size of at least one processing block included in the image, and the bitstream generator 210 may generate a bitstream including information about the size of the processing block. The size of the processing block may be a predetermined size of a data unit indicated by the information about the size of the processing block.

According to an embodiment, the bitstream generator 210 of the image encoding apparatus 200 may generate a bitstream including information about the size of the processing block, with respect to each of certain data units. For example, the bitstream including the information about the size of the processing block may be generated with respect to each of data units such as an image, a sequence, a picture, a slice, a slice segment, etc. That is, the bitstream generator 210 may generate a bitstream including information about the size of the processing block for each of the various data units, the encoder 220 may determine the size of the processing block split from the picture by using the information about the size of the processing block, and the size of the processing block may be integer-times greater than the reference coding unit.

According to an embodiment, the encoder 220 may determine sizes of processing blocks 1602 and 1612 included in a picture 1600. For example, the encoder 220 may determine the size of the processing block based on the information about the size of the processing block. Referring to FIG. 16, the encoder 220 may determine a width of the processing blocks 1602 and 1612 to be 4 times greater than a width of the reference coding unit, and a height of the processing blocks 1602 and 1612 to be 4 times greater than a eight of the reference coding unit. The encoder 220 may determine an order of determining at least one reference coding unit in at least one processing block. Operations of the encoder 220 related to the processing block may be similar to those of the decoder 130 described above with reference to FIG. 16, and thus, descriptions thereof are omitted.

According to an embodiment, the bitstream generator 210 of the image encoding apparatus 200 may generate a bitstream including block type information indicating the shape of the current coding unit or split type information representing a method of splitting the current coding unit. The block type information or the split type information may be included in a bitstream related to various data units. For example, the bitstream generator 210 of the image encoding apparatus 200 may use block type information or split type information included in a sequence parameter set, a picture parameter set, a video parameter set, a slice header, or a slice segment header. Moreover, the bitstream generator 210 of the image encoding apparatus 200 may generate a bitstream including a syntax representing the block type information or the split type information for each of the largest coding unit, the reference coding unit, and the processing block.

According to an embodiment, the encoder 220 may determine a kind of split type of a coding unit, to be different according to a predetermined data unit. The encoder 220 of the image encoding apparatus 200 may determine a combination of split types of the coding unit to be different according to a predetermined data unit (e.g., a sequence, a picture, a slice, etc.) according to an embodiment.

FIG. 17 is a diagram of coding units that may be determined for each picture, in a case where pictures have different combinations of split types of a coding unit from one another.

Referring to FIG. 17, the encoder 220 may determine the combination of the split types of the coding unit to be different according to each picture. For example, the encoder 220 may encode an image by using a picture 1700 that may be split as four coding units, a picture 1710 that may be split as two or four coding units, and a picture 1720 that may be split as two, three, or four coding units, from among one or more pictures included in the image. The encoder 220 may split the picture 1700 as four square coding units. The encoder 220 may split the picture 1710 as two or four coding units. The encoder 220 may split the picture 1720 as two, three, or four coding units. The above-described combination of the split types is an example for describing operations of the image encoding apparatus 200, and thus, the combination of the split types is not limited to the above embodiment, and it is interpreted that various combinations of split types may be used with respect to a predetermined data unit.

According to an embodiment, the encoder 220 of the image encoding apparatus 200 may determine a combination of the split type, by which the coding unit may be split, for each predetermined data unit by using an index indicating the combination of the split type information, and accordingly, each predetermined data unit may use different combination of the split type from the others. Furthermore, the bitstream generator 210 of the image encoding apparatus 200 may generate a bitstream including an index indicating the combination of the split type information for each predetermined data unit (e.g., a sequence, a picture, a slice, etc.) For example, the bitstream generator 210 may generate a sequence parameter set, a picture parameter set, or a slice header including the index indicating the combination of the split type information..

FIGS. 18 and 19 show various types of coding unit that may be determined based on split type information expressed in a binary code, according to an embodiment.

According to an embodiment, the encoder 220 of the image encoding apparatus 200 may split the coding unit in various types, and may generate a bitstream including the block type information and the split type information via the bitstream generator 210. The split types of the coding unit may include various types including the above-described types in the above embodiment. Referring to FIG. 18, the encoder 220 may split the coding unit of a square type in one of a horizontal direction and a vertical direction based on the split type information, and may split a coding unit of non-square shape in a horizontal or vertical direction. Characteristics of the binary code of the split type information that may be used by the image encoding apparatus 200 may correspond to those of the image decoding apparatus 100 described above with reference to FIGS. 18 and 19, and thus, detailed descriptions thereof are omitted.

According to an embodiment, the image encoding apparatus 200 may generate prediction data by performing an inter prediction or intra prediction on a coding unit, may generate residual data by performing an inverse-transformation on a transformation unit included in a current coding unit, and may encode the current coding unit by using the prediction data and the residual data.

According to an embodiment, a prediction mode of the coding unit may be at least one of an intra mode, an inter mode, and a skip mode. According to an embodiment, prediction may be independently performed on each coding unit, so that a prediction mode having a minimum error may be selected.

For example, when a coding unit of 2Nx2N is split and becomes two 2NxN or two Nx2N coding units, a prediction in the inter mode and a prediction in the intra mode may be separately performed on the coding units. Also, according to an embodiment, the encoder 220 of the image encoding apparatus 200 may encode the coding unit by using a CU skip mode in a case where the coding unit has a non-square shape, as well as a square shape. Since the image may be decoded in the CU skip mode even in a case of the coding unit of non-square shape, as well as the coding unit of the square shape determined at least one of the block type information and the split type information, the skip mode that is relatively more adaptive may be used and encoding/decoding efficiency of the image may be improved. The characteristic of the image encoding apparatus 200 using the skip mode in the coding unit of the non-square shape may be similar to that of the image encoding apparatus 200 using the skip mode described above, and thus, detailed descriptions thereof are omitted.

FIG. 22 is a diagram illustrating a process of performing merging or splitting between coding units determined according to a predetermined encoding method, according to an embodiment.

According to an embodiment, the image encoding apparatus 200 may determine coding units for splitting the picture by using the above-described predetermined encoding method. For example, the image encoding apparatus 200 may determine a coding unit of a current depth or may split the coding unit into four coding units of a lower depth, based on split information of the coding unit. As described above, the image encoding apparatus 200 may determine the coding unit by using the block type information representing that the current coding unit always has the square shape, and the split type information representing that the current coding unit may not be split or may be split as four square coding units. Referring to FIG. 22, pictures 2200 and 2220 may be split according to the square coding unit determined by the above-described encoding method.

However, according to the above-described predetermined decoding unit, whether the current coding unit may be split is determined according to whether it is suitable for expressing a relatively small object included in the current coding unit, and thus, it may be impossible to encode a larger object and a smaller object in the picture via one coding unit. Here, an object may be a set of samples included in the picture, and may denote a region of samples having similar sample values to one another, which may be distinguished from the other regions. Referring to FIG. 22, the image encoding apparatus 200 may split a first coding unit 2222 as four coding units of a lower depth to reconstruct a smaller object 2221, and may determine a coding unit for decoding the smaller object 2221. However, since a larger object 2223 is not included in the current coding unit 2222, the larger object 2223 is not suitable to be decoded by using the current coding unit 2222. Further, since the current coding unit 2222 is split to decode the smaller object 2221, a splitting process of the coding unit that is unnecessary for decoding the larger object 2223 has to be performed and the process is not efficient. That is, when the image encoding apparatus 200 may use one coding unit to encode a part of the larger object 2223, an image encoding may be effectively performed.

According to an embodiment, the encoder 220 of the image encoding apparatus 200 may split the current coding unit by using at least one of the block type information and the split type information, and the block type information may be determined in advance to use only the square type and the split type information may be determined in advance not to split or to represent that the coding unit may be split into four square coding units. This may correspond to the process of determining the coding unit used in the predetermined encoding method described above with reference to one or more embodiments. In this case, the encoder 220 may use the sample values included in the picture, to merge the coding units with one another or to split the coding unit determined by using the predetermined encoding method. For example, the encoder 220 may detect various objects included in the picture by checking parts having similar sample values to each other, and may perform the merging/splitting process of the coding units based on the parts including the detected objects.

Referring to FIG. 22, the encoder 220 may determine a plurality of coding units for splitting the picture 2200, by using the above-described encoding method. However, even there is a part 2201 having similar sample value in the picture, a process of splitting the similar region as a plurality of coding units, not one coding unit, may be performed. In this case, even when the coding unit is determined by the predetermined encoding method, the encoder 220 may merge the coding units into one coding unit 2202 for perform the encoding as one coding unit. Referring to FIG. 22, as another embodiment, the encoder 220 may split the coding unit 2222 for encoding the smaller object 2221 into four coding units, by using the above-described predetermined encoding method. Since the coding units split as above may not include the detected larger object 2223, the encoder 220 may merge the coding units as one coding unit including the parts having similar sample values to each other (2225).

According to an embodiment, the encoder 220 may determine the coding unit by using the predetermined encoding method that may not split the coding unit or may split the coding unit into four coding units by using split information of the coding unit, and then, may re-split the coding unit taking into account the sample values of the samples included in the picture. That is, the coding unit may split the coding unit that has been already determined, as well as merge of the coding units, for determining the coding unit for each object. Referring to FIG. 22, the encoder may merge the coding units for the object 2223, or may re-split the coding unit that is merged for the object 2223 (2226) to determine the coding unit optimized for the object 2223. That is, the encoder 220 may determine a part that does not include the object 2223 as a separate coding unit from the object 2223, through the splitting process (2226).

When the bitstream of the image is generated after performing the merge or splitting of the coding units that are determined according to the predetermined encoding method by the operations of the image encoding apparatus 200, the image decoding apparatus 100 may decode the image by performing the image decoding method that is opposite order of the image encoding method, after obtaining the bitstream.

FIG. 23 is a diagram showing an index according to a Z-scanning order of coding units according to an embodiment.

According to an embodiment, the encoder 220 of the image encoding apparatus 200 may scan lower data units included in an upper data unit in a Z-scanning order. Also, according to an embodiment, the image encoding apparatus 200 may sequentially access data according to Z-scan indexes in the coding unit included in the largest coding unit or a processing block. According to an embodiment, the encoder 220 of the image encoding apparatus 200 may split a reference coding unit into at least one coding unit, as described above with reference to FIGS. 3 and 4. Here, in the reference coding unit, coding units of the square shape and coding units of the non-square shape may exist. Characteristics of the index according to the order of scanning the coding units in the Z-scanning order by the image encoding apparatus 200 may be similar to those of the image decoding apparatus 100 described above with reference to FIG. 23, and detailed descriptions thereof are omitted.

While the present disclosure has been particularly shown and described with reference to embodiments thereof, it will be understood by one of ordinary skill in the art that various changes in form and details may be made therein without departing from the scope of the disclosure as defined by the following claims. The embodiments may be considered in a descriptive sense only and not for purposes of limitation. Therefore, the scope of the disclosure is defined not by the detailed description of the disclosure but by the following claims, and all differences within the scope will be construed as being included in the present disclosure.

Meanwhile, the afore-described embodiments of the present disclosure may be written as computer programs and implemented in general-use digital computers that execute the programs using a computer-readable recording medium. Examples of the computer-readable recording medium include magnetic storage media (e.g., ROM, floppy disks, hard disks, etc.), optical recording media (e.g., CD-ROMs, or DVDs), etc.

## Claims

1. A video decoding method comprising:
determining a data unit for intra prediction from a video picture;
obtaining, from a bitstream, intra prediction type information indicating whether to predict the data unit according to a first intra prediction type that predicts using predetermined prediction information or a second intra prediction type that predicts using data units adjacent to the data unit;
determining a first data unit predicted according to the first intra prediction type and a second data unit predicted according to the second intra prediction type, based on the intra prediction type information obtained from the bitstream;
generating a first prediction value with respect to the first data unit predicted according to the first intra prediction type by using the predetermined prediction information; and
generating a second prediction value with respect to the second data unit predicted according to the second intra prediction type by using the data units adjacent to the data unit.

2. The video decoding method of claim 1, wherein the predetermined prediction information is included in at least one of a sequence parameter set (SPS), a picture parameter set (PPS), and a slice header.

3. The video decoding method of claim 1, wherein the predetermined prediction information comprises a sample value adjacent to a data unit of an upper layer comprising the first data unit predicted according to the first intra prediction type.

4. The video decoding method of claim 1, wherein the generating of the second prediction value with respect to the second data unit predicted according to the second intra prediction type comprises: generating a prediction value by using at least one of a left data unit and a top data unit adjacent to the second data unit predicted according to the second intra prediction type.

5. The video decoding method of claim 1, wherein the generating of the second prediction value with respect to the second data unit according to the second intra prediction type comprises: generating a prediction value by using at least one of a right data unit and a bottom data unit adjacent to the second data unit according to the second intra prediction type.

6. The video decoding method of claim 1, further comprising: filtering the second prediction value with respect to the second data unit predicted according to the second intra prediction type.

7. The video decoding method of claim 6, wherein the data unit comprise one of coding units, prediction units, and transform units.

8. A video encoding method comprising:
determining a first data unit according to a first intra prediction type that predicts using predetermined prediction information and a second data unit according to a second intra prediction type that predicts using data units adjacent to the second data unit;
generating a first prediction value with respect to the first data unit predicted according to the first intra prediction type by using the predetermined prediction information;
generating a second prediction value with respect to the second data unit predicted according to the second intra prediction type by using the data units adjacent to the second data unit; and
generating a bitstream comprising encoding information determined based on at least one of the first prediction value and the second prediction value to encode a video picture,
wherein the bitstream comprises the predetermined prediction information.

9. The video encoding method of claim 8, wherein the predetermined prediction information is included in at least one of a sequence parameter set (SPS), a picture parameter set (PPS), and a slice header.

10. The video encoding method of claim 8, wherein the predetermined prediction information comprises a sample value adjacent to a data unit of an upper layer comprising the first data unit predicted according to the first intra prediction type.

11. The video encoding method of claim 8, wherein the generating of the second prediction value with respect to the second data unit predicted according to the second intra prediction type comprises: generating a prediction value by using at least one of a left data unit and a top data unit adjacent to the second data unit predicted according to the second intra prediction type.

12. The video encoding method of claim 8, the generating of the second prediction value with respect to the second data unit according to the second intra prediction type comprises: generating a prediction value using at least one of a right data unit and a bottom data unit adjacent to the second data unit predicted according to the second intra prediction type.

13. The video encoding method of claim 8, further comprising: filtering the second prediction value with respect to the second data unit predicted according to the second intra prediction type.

14. The video encoding method of claim 8, wherein the data unit comprises one of coding units, prediction units, and transform units.

15. A video decoding apparatus comprising:
a data unit determiner configured to determine data units for intra prediction from a video picture;
a bitstream obtainer configured to obtain, from a bitstream, intra prediction type information indicating whether to predict the data units according to a first intra prediction type that predicts using predetermined prediction information or a second intra prediction type that predicts using data units adjacent to the data units; and
a decoder configured to determine a first data unit predicted according to the first intra prediction type and a second data unit predicted according to the second intra prediction type, based on the intra prediction type information obtained from the bitstream, generate a first prediction value with respect to the first data unit predicted according to the first intra prediction type using the predetermined prediction information, and generate a second prediction value with respect to the second data unit predicted according to the second intra prediction type using the data units adjacent to the data units.
